# EUROPEAN PATENT SPECIFICATION

(11) **EP 2 979 962 B1**
(45) Date of publication and mention of the grant of the patent: **07.03.2018**
(21) Application number: 14196756.2
(22) Date of filing: 08.12.2014
(51) Int. Cl.: B62J 17/00, B62J 17/02, B62J 17/06, B62J 25/00

(54) **Saddle-straddling type motor vehicle**
Grätschsitz-Fahrzeug
Véhicule du type monté à califourchon

(30) Priority: 30.07.2014 JP 2014155350
(43) Date of publication of application: 03.02.2016
(73) Proprietor: Yamaha Hatsudoki Kabushiki Kaisha, Iwata-shi, Shizuoka 438-8501 (JP)
(72) Inventor: Adachi, Takashi, Iwata-shi, Shizuoka 438-8501 (JP)
(74) Representative: Grünecker Patent- und Rechtsanwälte PartG mbB

(56) References cited:
- EP-A2- 1 172 289
- JP-A- H10 203 456

## Description

The present invention relates to a saddle-straddling type motor vehicle according to the preamble of independent claim 1. Such a saddle-straddling type motor vehicle can be taken from the prior art document EP 1 172 289 A2.

Prior art document JP H10-203456 A discloses a scooter type motorcycle with a floor skirt extending downward from an outer edge of a foot rest plate. The foot rest plate is formed with a vertical wall part extended downward from the outer edge by a fixed distance and a leg part extended downward in an inner position of the vertical wall part by a fixed distance. Under the leg part, a receiving pawl part is formed. On the other hand, the floor skirt is formed with a first cross part extended inward from the upper edge, rise up part rising from an inner end of the first cross part, and a second cross part extended inward from an upper part of the rise up part. An inner end of the second cross part is made butt against the leg part, and hooked to the receiving pawl part, also the rise up part is held to a reverse surface of the vertical wall part, and by holding the first cross part to a lower end of the vertical wall part, the floor skirt is mounted in the foot rest plate.

There is a scooter-type vehicle that has a configuration in which a cover member is provided between right and left footrests. The cover member is formed such that an inverted U-shaped cross section extends in a front-and-rear direction. A motorcycle described in JP 2012-116316 A includes a body frame including a head pipe as such a scooter-type vehicle. A front fork is provided at the head pipe. A front wheel is rotatably supported at a lower portion of the front fork.

A seat is supported by a body frame. A space through which a rider passes his or her foot when the rider gets on and off the vehicle is formed at a position behind the head pipe and in front of the seat. The rider is seated on the seat and places his/her feet on right and left step floors (footrests) provided at positions further downward than the above-mentioned space.

A front cover, and right and left front side covers are provided at a front portion of the motorcycle. Further, an upper inner cover and a lower inner cover are provided behind the right and left front side covers. An upper portion of the front fork is surrounded by the right and left front side covers and the upper inner cover. Right and left lower covers are provided at lower portions of the right and left front side covers, respectively. Parts of the right and left lower covers constitute the above-mentioned step floors.

As described above, in the scooter-type vehicle that has a configuration in which the cover member that is formed such that the inverted U-shaped cross section extends in the front-and-rear direction between the right and left footrests is provided, various components can be stored in an inner space of the cover member.

For such a scooter-type vehicle, it is considered a configuration including right and left footrest covers and a cover member, described below, in order to inhibit a decrease in comfort of right and left footrests while ensuring flexibility in layout of the components provided inside of the cover member. Each of the right and left footrest covers has a footrest and a sidewall. The footrest is formed to extend in a vehicle right-and-left direction. Further, the sidewall is formed to extend upward from the inner edge of the footrest. The cover member and the right and left sidewalls are connected such that the lower end of the above-mentioned cover member is located at positions further outward than the sidewalls of the right and left footrest covers.

In this case, the size of the cover member in a right-and-left direction can be increased to be larger than the distance between the inner edges of the right and left footrests. Thus, it is possible to ensure flexibility in layout of the components provided inside of the cover member without increasing the distance between the right and left footrests. That is, a decrease in comfort of the right and left footrests can be inhibited while flexibility in layout of the components provided inside of the cover member is ensured.

However, when the scooter-type vehicle having the above-mentioned configuration was driven on the wet road surface, a phenomenon in which the water led from the road surface flowed out to the outer surfaces of the right and left footrests from gaps at the connection portions between the cover member and the right and left sidewalls occurred.

An object of the present invention is to provide a saddle-straddling type motor vehicle in which water led from a road surface can be inhibited from flowing out to outer surfaces of the right and left footrests while flexibility in layout of components is ensured and a decrease in comfort of the right and left footrests is inhibited.

According to the present invention said object is solved by a saddle-straddling type motor vehicle having the features of independent claim 1. Preferred embodiments are laid down in the dependent claims.

It has been fabricated a saddle-straddling type motor vehicle that had a configuration in which the right and left side covers were connected to the right and left footrests, respectively, such that the lower ends of the right and left side covers were located at positions further outward than the sidewalls of the right and left footrest covers. This saddle-straddling type motor vehicle includes the above-mentioned tunnel cover. Further, it is provided the inner cover that did not have an opening in the fabricated saddle-straddling type motor vehicle. The saddle-straddling type motor vehicle fabricated in this manner is referred to as a test vehicle. It has been drove the test vehicle on the wet road surface, a phenomenon in which the water led from the road surface flowed out to the outer surfaces of the right and left footrests from gaps at the connection portions between the right and left side covers and the right and left footrest covers occurred.

It has been acquired findings as a result of thoroughgoing research that the above-mentioned phenomenon occurred based on the below-mentioned mechanism. When the above-mentioned test vehicle travels on the wet road surface, the front wheel stirs up the water on the road surface, and splashes the water to a space behind the front wheel. The water splashed from the front wheel adheres to the surface of the inner cover while receiving force in the rotation direction of the front wheel. The adhered water flows towards the upper end from below the inner cover via the surface of the inner cover.

In this case, when the upper end of the inner cover is located at a position further downward than the upper end of the front end opening of the tunnel cover, the water that has flowed out to the upper end of the inner cover enters the inside of the tunnel cover from the front end opening.

When the water that has entered the inside of the tunnel cover adheres to the inner surfaces of the right and side covers, the adhered water flows downward via the inner surfaces of the right and left side covers due to the effect of gravity. The water that flows downward is led to the connection portions between the right and left side covers and the right and left footrest covers. The water led to the connection portions flows out to the outer surfaces of right and left footrests from the gaps at the connection portions.

Therefore, it is devised a configuration in which an opening opposite to the front wheel was formed at the inner cover based on the above-mentioned findings. Thus, when the saddle-straddling type motor vehicle according to the preferred embodiment travels on the wet road surface, the water splashed from the front wheel towards the inner cover is led into the opening without reaching the upper end of the inner cover. Further, the opening of the inner cover was configured to be located below the connection portions between the right and left side covers and the right and left footrest covers in the side view of the vehicle. In this case, a large amount of water led to the opening of the inner cover falls behind the inner cover at a position further downward than the connection portions. Therefore, the water is unlikely to adhere to the inner surfaces of the right and left side covers.

Thus, the water splashed from the front wheel is inhibited from being led to the connection portions between the right and left side covers and the right and left footrest covers. Therefore, the water led from the road surface is inhibited from flowing out to the outer surfaces of the right and left footrests from the gaps at the connection portions between the right and left side covers and the right and left footrest covers.

Each of the connection portions may include a front connection portion that extends rearward and downward from a front end, and a rear connection portion that extends rearward and upward from a rear end of the front connection portion, and the opening of the inner cover may be located at a position further downward than the front connection portions.

In this case, the water led to the opening of the inner cover falls behind the inner cover at a position further downward than the front connection portions. Therefore, the water led from the road surface is inhibited from flowing out to the outer surfaces of the right and left footrests from the gaps at the front connection portions.

A front eave portion may be provided above the opening in the inner cover in a front view of the vehicle, and the front eave portion may extend forward and downward from a position above the opening.

In this case, in the inner cover, the water that flows upward from below on a region opposite to the front wheel is caught by the inner surface of the front eave portion, and is led to the opening. Thus, a large amount of water splashed from the front wheel falls behind the inner cover at a position further downward than the right and left side covers. Therefore, an amount of water led to the connection portions between the right and left side covers and the right and left footrest covers can be more sufficiently decreased. As a result, the water led from the road surface is more sufficiently inhibited from flowing out to the outer surfaces of the right and left footrests from the gaps at the connection portions between the right and left side covers and the right and left footrest covers.

A rear eave portion may be provided above the opening in the inner cover in a front view of the vehicle, and the rear eave portion may extend rearward and downward from the position above the opening.

In this case, the water led into the opening of the inner cover falls behind the inner cover via the inner surface of the rear eave portion. Thus, the water led rearward from the opening of the inner cover is inhibited from being splashed to a position further upward than the connection portions between the right and left side covers and the right and left footrest covers. Therefore, an amount of water led to the connection portions between the right and left side covers and the right and left footrest covers can be more sufficiently decreased. As a result, the water led from the road surface is more sufficiently inhibited from flowing out to the outer surfaces of the right and left footrests from the gaps at the connection portions between the right and left side covers and the right and left footrest covers.

The saddle-straddling type motor vehicle may further include a front fender attached to the front fork, wherein the opening of the inner cover may be located behind the front wheel to be opposite to the front wheel, and may be located at a position further downward than a rear lower end of the front fender in the side view of the vehicle.

Thus, the water that cannot be caught by the front fender can be led to the opening of the inner cover while an increase in size of the front fender is inhibited. Therefore, an increase in size of the front portion of the vehicle is inhibited, and the water led from the road surface is inhibited from flowing out to the outer surfaces of the right and left footrests from the gaps at the connection portions between the right and left side covers and the right and left footrest covers.

The opening of the inner cover may be located at a position further upward than an axle of the front wheel. In this case, a large amount of water splashed from the front wheel can be led into the opening. Thus, an amount of water led to the connection portions between the right and left side covers and the right and left footrest covers can be more sufficiently decreased. As a result, the water led from the road surface is more sufficiently inhibited from flowing out to the outer surfaces of the right and left footrests from the gaps at the connection portions between the right and left side covers and the right and left footrest covers.

The main body may further include a head pipe, and a down frame that extends downward from the head pipe, the part of the inner cover may be located between the front wheel and the down frame, the inner cover may have a front surface and a back surface, a concave portion that extends in a top-and-bottom direction may be formed at the back surface of the inner cover, and a convex portion that corresponds to the concave portion may be formed at the front surface of the inner cover, and the opening of the inner cover may be located at a position further downward than the convex portion.

In this case, the inner cover can be arranged at a position even further rearward while a clearance is provided between part of the down frame and the concave portion at the back surface of the inner cover. Therefore, a large space can be ensured between the front surface of the inner cover and the front wheel. Thus, because a region in which the front fork and the front wheel are rotatable can be increased, an increase in size of the front portion of the vehicle can be inhibited.

Further, because the opening of the inner cover is located at a position further downward than the convex portion formed at the front surface of the inner cover, the water caught by the front surface of the inner cover is led into the opening without reaching the above-mentioned convex portion. Thus, the water caught at the front surface of part of the inner cover is inhibited from being splashed again by colliding with the convex portion.

As a result, an increase in size of the front portion of the vehicle is inhibited, and the water led from the road surface is inhibited from flowing out to the outer surfaces of the right and left footrests from the gaps at the connection portions between the right and left side covers and the right and left footrest covers.

According to the subject t matter of claim 1, even when the water led from the road surface flows downward via the inner surfaces of the right and left side covers, the water that flows downward from the lower ends of the right and left side covers is caught by the grooves. Therefore, the water that flows downward via the inner surfaces of the right and left side covers is inhibited from flowing out to the outer surfaces of the footrests through the gaps at the connection portions between the right and left side covers and the right and left footrest covers.

According to the subject matter of claim 1, the water caught by the groove is discharged to a space further inward than the right and left footrest covers through the discharge hole after flowing rearward and downward from the front. Thus, the water led to the grooves does not overflow from the grooves. As a result, the water led to the groove is inhibited from flowing out to the outer surface of the footrest.

### BRIEF DESCRIPTION OF THE SEVERAL VIEWS OF THE DRAWING

Fig. 1 is a side view of one side of a motorcycle according to one preferred embodiment;
Fig. 2 is a front view of the motorcycle of Fig. 1 as viewed from the front;
Fig. 3(a) is a plan view of a body frame of Fig. 1 as viewed from above;
Fig. 3(b) is a side view of the body frame of Fig. 1 as viewed from a position further leftward than a vehicle;
Fig. 4(a) is a front view of an inner cover of Fig. 1 as viewed from the front;
Fig. 4(b) is a side view of the inner cover of Fig. 1 as viewed from a position further leftward than the vehicle;
Fig. 5(a) is a plan view of an upper cover of Fig. 1 as viewed from above;
Fig. 5(b) is a side view of the upper cover of Fig. 1 as viewed from a position further leftward than the vehicle;
Fig. 6(a) is a plan view of a left side cover of Fig. 1 as viewed from above;
Fig. 6(b) is a side view of the left side cover of Fig. 1 as viewed from a position further leftward than the vehicle;
Fig. 7(a) is a plan view of a left side cover of Fig. 1 as viewed from above;
Fig. 7(b) is a side view of the left side cover of Fig. 1 as viewed from a position further leftward than the vehicle;
Fig. 8(a) is a plan view of a left footrest cover of Fig. 1 as viewed from above;
Fig. 8(b) is a side view of the left footrest cover of Fig. 1 as viewed from a position further leftward than the vehicle;
Fig. 9(a) is a plan view of a lower cover of Fig. 1 as viewed from above;
Fig. 9(b) is a side view of the lower cover of Fig. 1 as viewed from a position further leftward than the vehicle;
Fig. 10 is an external perspective view showing an assembly procedure of a body cover of Fig. 1;
Fig. 11 is an external perspective view showing the assembly procedure of the body cover of Fig 1;
Fig. 12 is an external perspective view showing the assembly procedure of the body cover of Fig. 1;
Fig. 13 is an external perspective view showing the assembly procedure of the body cover of Fig. 1;
Fig. 14 is an external perspective view showing the assembly procedure of the body cover of Fig. 1;
Fig. 15 is an external perspective view showing the assembly procedure of the body cover of Fig. 1;
Fig. 16 is a partially enlarged side view of the motorcycle of Fig. 1;
Fig. 17 is a cross sectional view of the motorcycle cut along a vertical plane including the line K-K of Fig. 2;
Fig. 18 is a cross sectional view of a down frame and the inner cover cut along a horizontal plane including the line U-U of Fig. 17,
Fig. 19 is a partially enlarged side view of the motorcycle of Fig. 1;
Fig. 20(a) is a cross sectional view of the left side cover and the left footrest cover cut along a vertical plane including the line Q1-Q1 of Fig. 19; and
Fig. 20(b) is a cross sectional view of the left side cover and the left footrest cover cut along a vertical plane including the line Q2-Q2 of Fig. 19.

### DESCRIPTION OF THE PREFERRED EMBODIMENTS

A saddle-straddling type motor vehicle according to one preferred embodiment will be described below with reference to drawings. In the following description, a motorcycle will be described as one example of the saddle-straddling type motor vehicle.

### [1] Schematic Configuration of Motorcycle

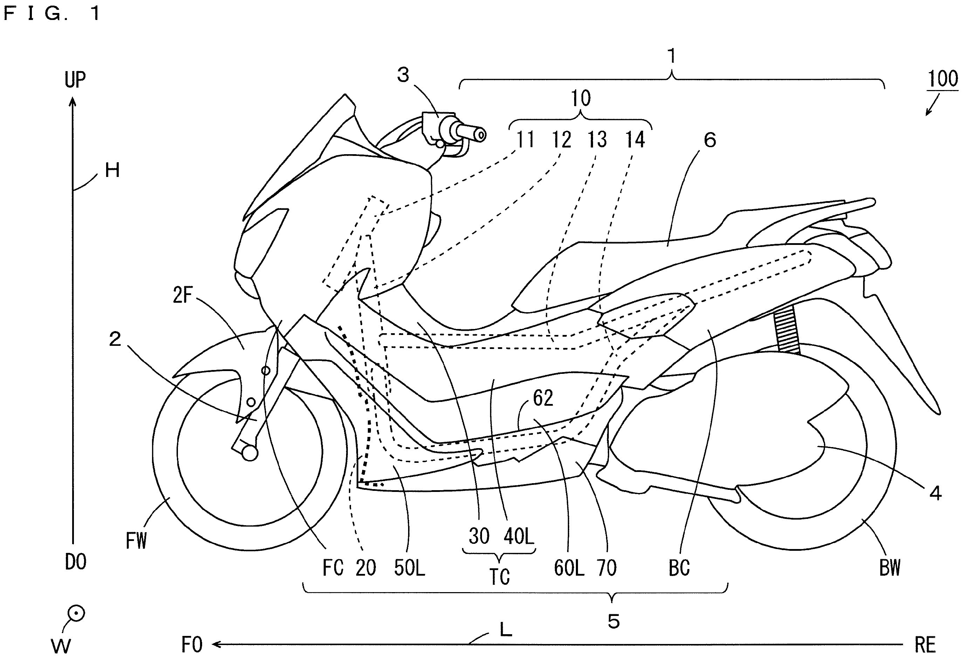

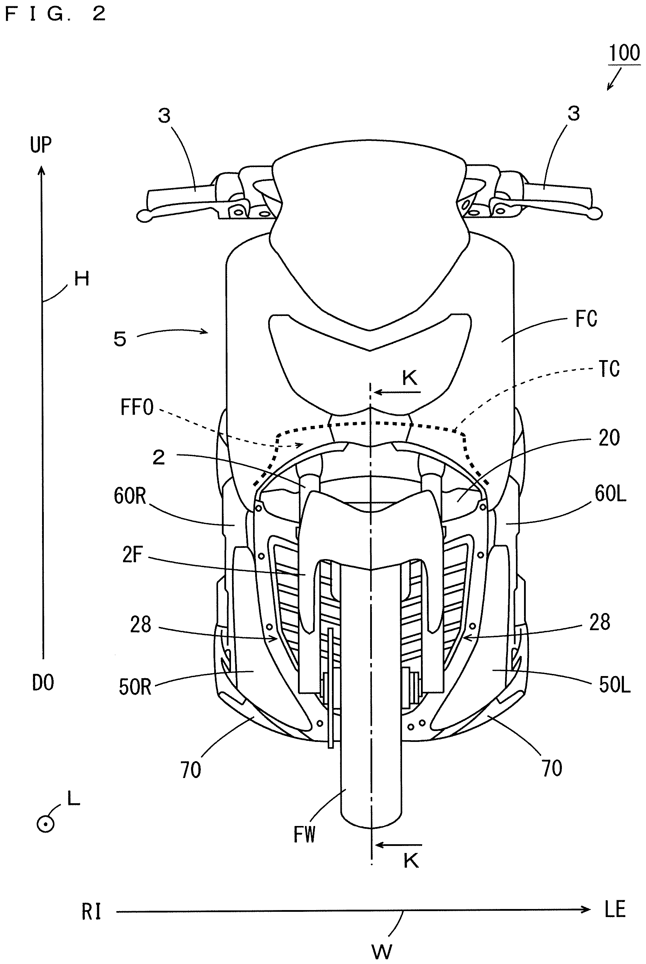

Fig. 1 is a side view of one side of the motorcycle according to one preferred embodiment, and Fig. 2 is a front view of the motorcycle 100 of Fig. 1 as viewed from the front.

In Figs. 1 and 2, the motorcycle 100 standing up to be perpendicular to the road surface is shown. In Figs. 1, 2, and each of subsequent given diagrams, a front-and-rear direction L, a right-and-left direction W and a top-and-bottom direction H of the motorcycle 100 are indicated by arrows. In the following description, a direction in which the arrow is directed in the front-and-rear direction L is referred to as forward, and its opposite direction is referred to as rearward. Further, a direction in which the arrow is directed in the right-and-left direction W is referred to as leftward, and its opposite direction is referred to as rightward. Further, a direction in which the arrow is directed in the top-and-bottom direction H is referred to as upward, and its opposite direction is referred to as downward. Further, in each diagram, forward, rearward, leftward, rightward, upward and downward are indicated by reference characters FO, RE, LE, RI, UP, DO, respectively.

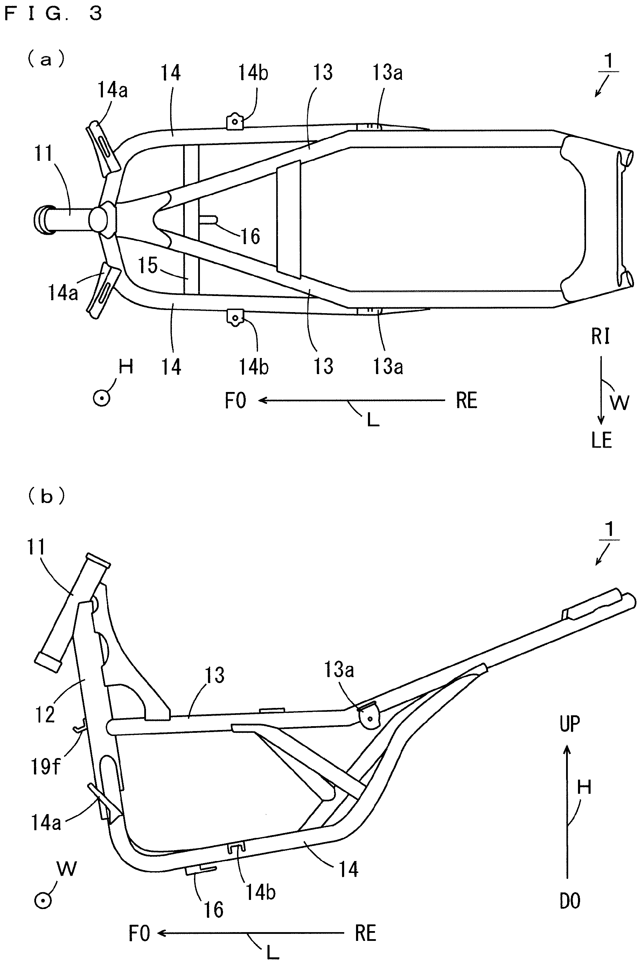

As shown in Fig. 1, the motorcycle 100 includes a body frame 10. Fig. 3(a) is a plan view of the body frame 10 of Fig. 1 as viewed from above, and Fig. 3(b) is a side view of the body frame 10 of Fig. 1 as viewed from a position further leftward than the vehicle. As shown in Figs. 1, 3(a) and 3(b), the body frame 10 includes a head pipe 11, a down frame 12, right and left upper frames 13, and right and left lower frames 14. A plurality of frame members that constitute the body frame 10 (the head pipe 11, the down frame 12, the right and left upper frames 13, and the right and left lower frames 14) are tubular, respectively. Further, these frame members are connected to one another by welding.

The head pipe 11 is provided to be inclined forward and downward from behind. The down frame 12 extends downward from a substantially central portion of the head pipe 11. The right and left upper frames 13 horizontally extend the rearward while spreading in the right-and-left direction W from a substantially central portion of the down frame 12, and are further curved rearward and upward.

The left lower frame 14 extends leftward and downward from a lower portion of the down frame 12, is curved rearward, and further extends rearward and upward towards the left upper frame 13. The right lower frame 14 extends rightward and downward from a lower portion of the down frame 12, is curved rearward, and further extends rearward and upward towards the right upper frame 13. The rear ends of the right and left lower frames 14 are connected to the right and left upper frames 13, respectively.

As shown in Figs. 3(a) and 3(b), cover fixing portions 13a are provided at a surface of the left upper frame 13 directed leftward and a surface of the right upper frame 13 directed rightward, respectively.

At a position slightly further rearward than the lower end of each of the right and left lower frames 14, a strip-shaped coupling plate 15 is provided to connect portions of the right and left lower frames 14 that are opposite to each other. A lower cover support piece 16 is provided at a central portion of the coupling plate 15 to project rearward from the coupling plate 15.

A cover fixing portion 14a is provided in the vicinity of the front end of the left lower frame 14 to project obliquely leftward, forward and upward from the left lower frame 14. Further, a cover fixing portion 14a is provided in the vicinity of the front end of the right lower frame 14 to project obliquely rightward, forward and upward from the right lower frame 14.

Further, a cover fixing portion 14b is provided at a position further rearward than the coupling plate 15 in the left lower frame 14 to project leftward. Further, a cover fixing portion 14b is provided at a position further rearward than the coupling plate 15 in the right lower frame 14 to project rightward. Further, as shown in Fig. 3(b), a hook 19f is provided on a surface of the down frame 12 directed forward.

As shown in Fig. 1, a front fork 2 is supported at the body frame 10 to be rotatable in the right-and-left direction W. The front fork 2 is provided at the head pipe 11 of the body frame 10 to be rotatable in the right-and-left direction W. A front wheel FW is rotatably supported at the lower end of the front fork 2. Further, a front fender 2F is provided at the front fork 2. Further, right and left handles 3 are provided at the upper end of the front fork 2.

A swing arm unit 4 is supported at the body frame 10 to be swingable in the top-and-bottom direction H. The swing arm unit 4 is supported by rear portions of the right and left lower frames 14 (Figs. 3(a) and 3(b)) to be swingable in the top-and-bottom direction H. The swing arm unit 4 includes an engine, a change gear mechanism and a swing arm. A rear wheel BW is rotatably supported at the rear end of the swing arm unit 4. The rear wheel BW is rotated by motive power generated by the engine of the swing arm unit 4. A seat 6 is supported by the right and left upper frames 13 (Figs. 3(a) and 3(b)) above the swing arm unit 4.

A body cover 5 made of resin is provided to cover part of the front fork 2 and the body frame 10. In the present embodiment, a vehicle main body 1 is constituted by the body frame 10, the body cover 5, the seat 6, the swing arm unit 4 and the rear wheel BW.

The body cover 5 includes a front cover FC, an inner cover 20, a tunnel cover TC, right and left front side covers 50R, 50L, right and left footrest covers 60R, 60L, a lower cover 70 and a rear cover BC. As shown in Fig. 2, the right and left front side covers 50R, 50L are arranged to be symmetrical with each other with respect to a vertical plane passing through the central portion of the vehicle. Further, the right and left footrest covers 60R, 60L are arranged to be symmetrical with each other with respect to the vertical plane passing through the central portion of the vehicle, for example.

The front cover FC is provided to mainly surround an upper portion of the front fork 2 and the head pipe 1. The rear cover BC is provided to surround rear portions of the right and left upper frames 13. The rear cover BC extends downward from edges on both sides and a rear end edge of the seat 6.

As shown in Figs. 1 and 2, the inner cover 20 is provided at a position further downward than the front cover FC and further rearward than the front wheel FW. The inner cover 20 is opposite to the front wheel FW. A central portion of the inner cover 20 in the right-and-left direction W is opposite to the front wheel FW. The right and left front side covers 50R, 50L are provided to extend rearward from edges on both sides of the inner cover 20. The right and left footrest covers 60R, 60L are connected to the right and left front side covers 50R, 50L to extend in the front-and-rear direction L, respectively.

As shown in Fig. 1, each of the right and left footrest covers 60R, 60L is located at a position further downward than the seat 6. Further, at least part of each of the right and left footrest covers 60R, 60L is located at a position further rearward than the inner cover 20. Further, each footrest cover 60R, 60L has a footrest 62.

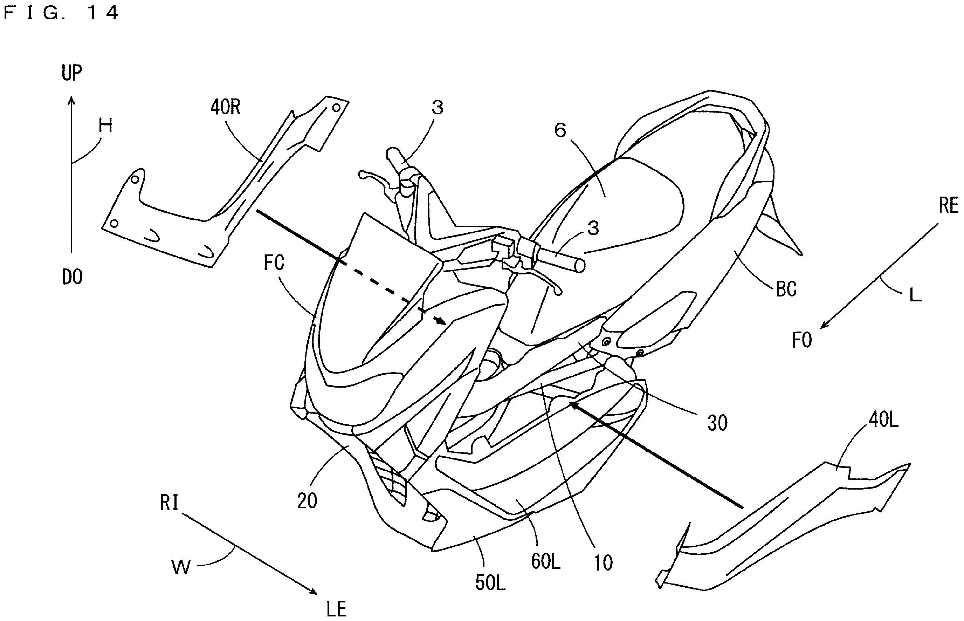

The tunnel cover TC is provided such that at least part of the tunnel cover TC is located at a position further rearward than the inner cover 20 and further forward than the seat 6. The tunnel cover TC surrounds a space above an area between the right and left footrest covers 60R, 60L from above, and right and left sides. The tunnel cover TC includes an upper cover 30, and right and left side covers 40R, 40L. The right and left side covers 40R, 40L are arranged to be symmetrical with each other with respect to the vertical plane passing through the central portion of the vehicle. The right side cover 40R is shown in Fig. 14, described below.

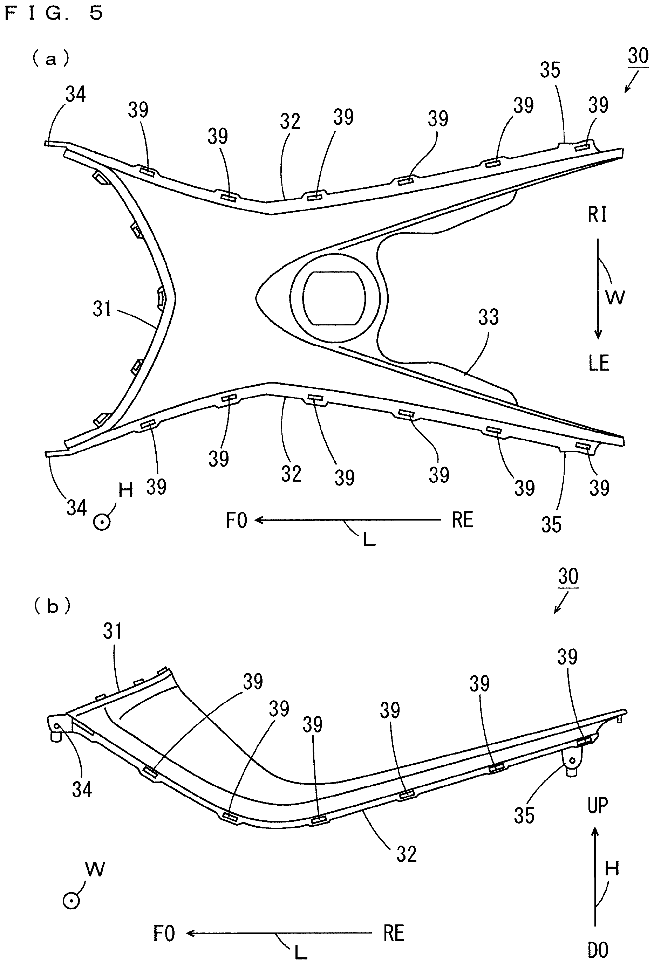

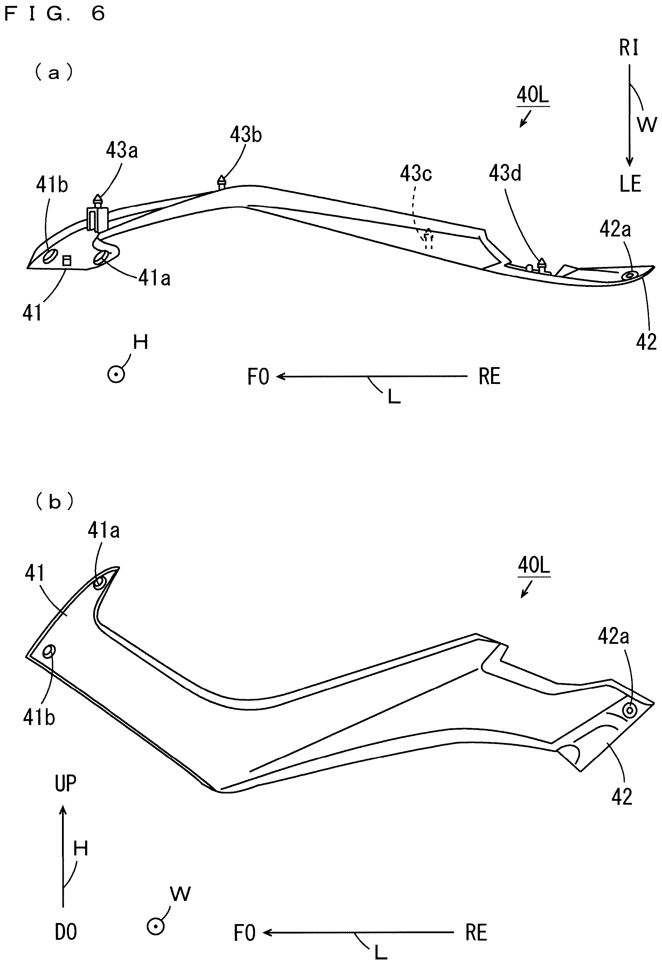

The upper cover 30 is provided at a position further upward than the right and left footrest covers 60R, 60L. The upper cover 30 extends in the front-and-rear direction L. The right and left side covers 40R, 40L extend in the front-and-rear direction L, and extend downward from right and left side edges 32 of the upper cover 30 (see Fig. 5(a), described below). A front end opening FFO of the tunnel cover TC is formed by the upper cover 30 and a front end 41 of each of the right and left side covers 40R, 40L (see Figs. 6(a) and 6(b), described below) as indicated by the thick dotted line in Fig. 2. The upper end of the inner cover 20 is located at a position further forward and downward than the upper end of the front end opening FFO of the tunnel cover TC.

### [2] Configuration and Assembly Procedure of each Portion of Body Cover 5

### (2-1) Inner Cover 20

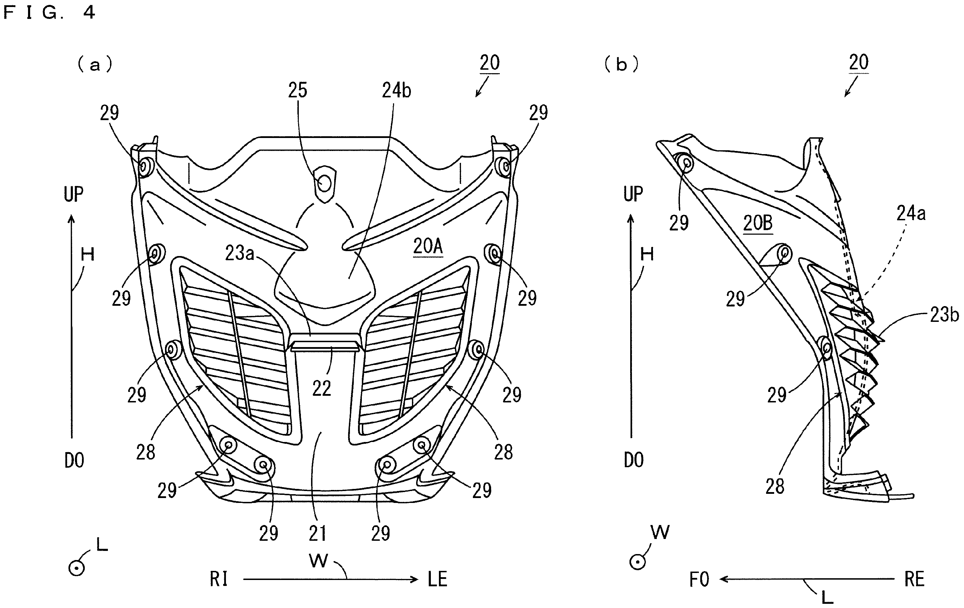

Fig. 4(a) is a front view of the inner cover 20 of Fig. 1 as viewed from the front, and Fig. 4(b) is a side view of the inner cover 20 of Fig. 1 as viewed from a position further leftward than the vehicle. As shown in Fig. 4(a), the inner cover 20 has an inverted-trapezoid shape in a front view of the vehicle. Further, as shown in Fig. 4(a) and 4(b), the inner cover 20 is curved such that the both ends of the inner cover 20 in the right-and-left direction W are located at positions further forward than the central portion.

The inner cover 20 has a front surface 20A and a back surface 20B. A central portion of the front surface 20A of the inner cover 20 in the right-and-left direction W is opposite to the front wheel FW with the inner cover 20 being provided at the vehicle main body 1 of Fig. 1. At the central portion of the front surface 20A of the inner cover 20, a water receiver 21, an opening 22, a convex portion 24b and a through hole 25 are formed in this order upward from below. At the portion of the front surface 20A of the inner cover 20 opposite to the front wheel FW, the water receiver 21, the opening 22, the convex portion 24b and the through hole 25 are formed in this order upward from below.

The water receiver 21 has a surface directed forward and is gently curved in the top-and-bottom direction H. The opening 22 is formed at the upper end of the water receiver 21. A space in front of the inner cover 20 and a space behind the inner cover 20 communicate with each other through the opening 22.

A front eave portion 23a (Fig. 4(a)) is integrally formed at the upper end of the opening 22 to extend forward and downward. Further, a rear eave portion 23b (Fig. 4(b)) is integrally formed at the upper end of the opening 22 rearward and downward.

The convex portion 24b is provided to correspond to a concave portion 24a of Fig. 4(b) formed at the back surface 20B of the inner cover 20. The concave portion 24a is formed to extend in the top-and-bottom direction H. The function of the concave portion 24a will be described below. The through hole 25 is formed such that the hook 19f provided at the down frame 12 of Fig. 3(b) can be inserted.

Gas introduction sections 28 are formed at right and left sides of the water receiver 21, respectively. Each gas introduction section 28 has a configuration in which a plurality of plate-shape members are attached to the opening. As shown in Fig. 2, the right and left gas introduction sections 28 are located on the right and left of the front wheel FW when the motorcycle 100 is viewed from the front. When the motorcycle 100 travels on the road surface, air flowing from the front is led to the inside of the vehicle main body 1 through the gas introduction sections 28. Thus, a component provided inside of the body cover 5 (a radiator (not shown), for example) is cooled.

As shown in Figs. 4(a) and 4(b), a plurality of (five in the present example) connection portions 29 are formed upward from below in the vicinity of the edges on both sides of the inner cover 20. Through holes are formed at the plurality of connection portions 29.

### (2-2) Upper Cover 30

Fig. 5(a) is a plan view of the upper cover 30 of Fig. 1 as viewed from above, and Fig. 5(b) is a side view of the upper cover 30 of Fig. 1 as viewed from a position further leftward than the vehicle. As shown in Fig. 5(a), the upper cover 30 has a front edge 31, right and left side edges 32 and a rear edge 33. The front edge 31 is curved such that both ends in the right-and-left direction W are located at positions further forward than the central portion. The rear edge 33 is formed in a concave shape rearward so as not to interfere with the front end of the seat 6 of Fig. 1. A plurality of rectangular connection holes 39 are formed in the vicinity of the right and left side edges 32.

As shown in Figs. 5(a) and 5(b), connection portions 34 are provided at the front ends of the right and left side edges 32 of the upper cover 30, respectively. Further, connection portions 35 are provided at the rear ends of the right and left side edges 32 of the upper cover 30, respectively. Through holes are formed at the connection portions 34, 35, respectively.

### (2-3) Side Covers 40R, 40L

Fig. 6(a) is a plan view of the left side cover 40L of Fig. 1 as viewed from above, and Fig. 6(b) is a side view of the left side cover 40L of Fig. 1 as viewed from a position further leftward than the vehicle. As shown in Figs. 6(a) and 6(b), the left side cover 40L is a strip-shaped member that extends in the front-and-rear direction L while being curved in the top-and-bottom direction.

Two connection portions 41a, 41b are formed at the front end 41 of the left side cover 40L to be arranged in the top-and-bottom direction. One connection portion 42a is formed at a rear end 42 of the left side cover 40L. Through holes are formed at the connection portions 41a, 41b, 42a, respectively.

Further, as shown in Fig. 6(a), a plurality of (four in the present example) attachment pieces 43a, 43b, 43c, 43d are provided at the inner surface of the left side cover 40L from the front end 41 to the rear end 42. The four attachment pieces 43a to 43d have a bar-shape, and project inward (rightward), respectively. Further, a plurality of ribs (not shown) are formed inside of the upper edge of the left side cover 40L. The plurality of ribs are formed such that the plurality of ribs can be fitted into the plurality of connection holes 39 of Figs. 5(a) and 5(b).

The right side cover 40R is configured to be symmetrical with the left side cover 40L with respect to a vertical plane parallel to the top-and-bottom direction H and the front-and-rear direction L.

### (2-4) Front Side Covers 50R, 50L

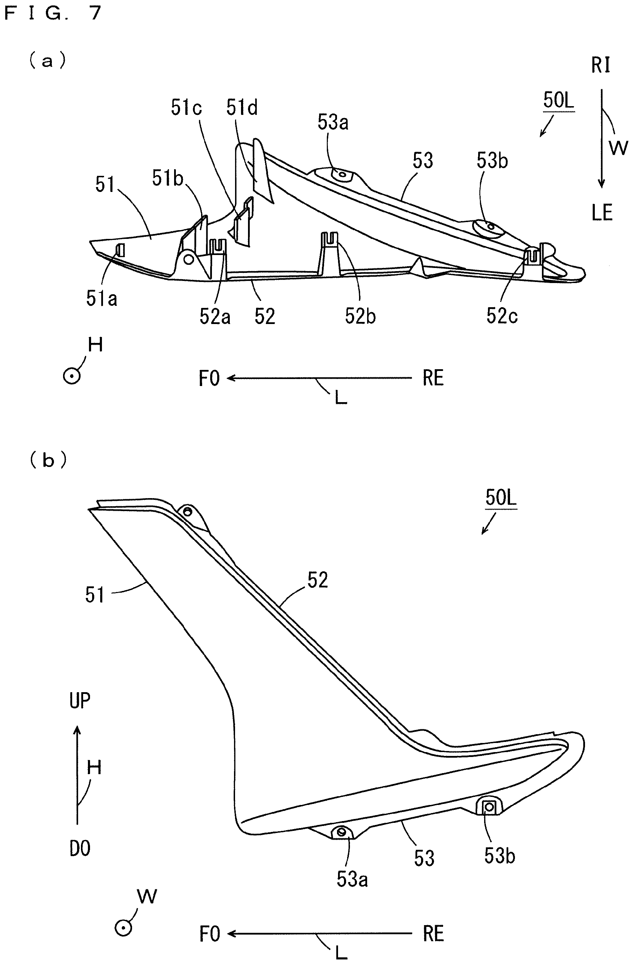

Fig. 7(a) is a plan view of the left front side cover 50L of Fig. 1 as viewed from above, and Fig. 7(b) is a side view of the left front side cover 50L of Fig. 1 as viewed from a position further leftward than the vehicle. As shown in Fig. 7(b), the left front side cover 50L has a front edge 51, an upper edge 52 and a lower edge 53.

The front edge 51 is formed to be inclined forward and upward from below. The upper edge 52 is formed to be inclined rearward and downward from the upper end of the front edge 51. The lower edge 53 extends in the substantially front-and-rear direction L to connect the lower end of the front edge 51 and the rear end of the upper edge 52.

As shown in Fig. 7(a), a plurality of (four in the present example) connection pieces 51a, 51b, 51c, 51d are provided in the vicinity of the front edge 51 at the inner surface of the left front side cover 50L. The four connection pieces 51a to 51d project inward (rightward), respectively.

A plurality of (three in the present example) support pieces 52a, 52b, 52c are provided at the upper edge 52. The three support pieces 52a to 52c project inward (rightward), respectively. Further, a plurality of (two in the present example) connection portions 53a, 53b are provided at the lower edge 53. Through holes are formed at the connection portions 53a, 53b, respectively.

The right front side cover 50R is configured to be symmetrical with the left front side cover 50L with respect to the vertical plane parallel to the top-and-bottom direction H and the front-and-rear direction L.

### (2-5) Footrest Covers 60R, 60L

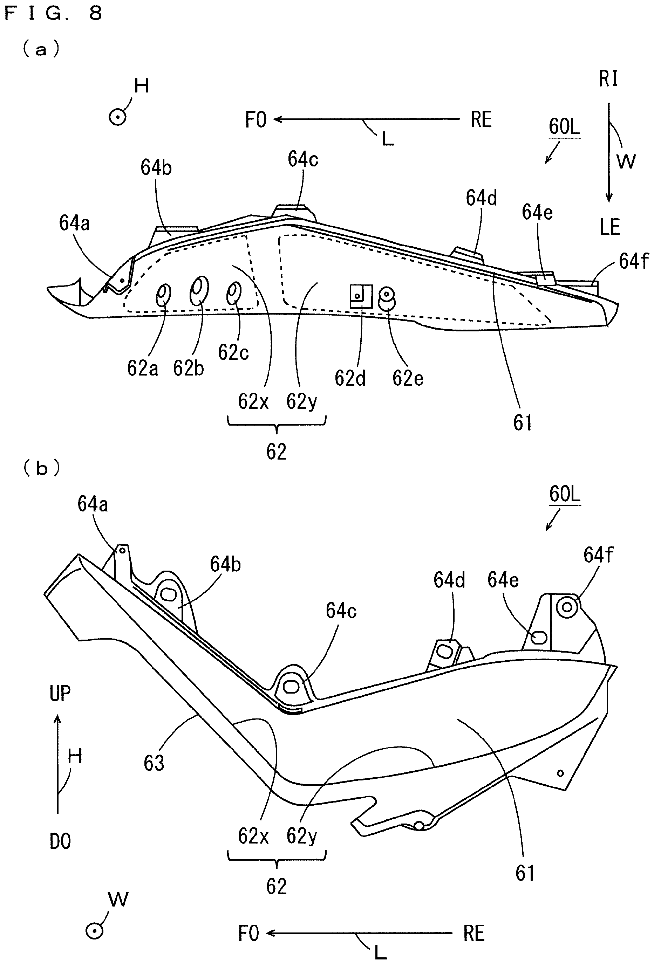

Fig. 8(a) is a plan view of the left footrest cover 60L of Fig. 1 as viewed from above, and Fig. 8(b) is a side view of the left footrest cover 60L of Fig. 1 as viewed from a position further leftward than the vehicle. As shown in Figs. 8(a) and 8(b), the left footrest cover 60L has the footrest 62 and a sidewall 61. The footrest 62 includes a front footrest 62x and a rear footrest 62y. The front footrest 62x and the rear footrest 62y are configured such that a foot of a rider can be placed, respectively.

The front footrest 62x is formed to extend in the right-and-left direction W and be inclined rearward and downward from the front. A plurality of (three in the present example) connection portions 62a, 62b, 62c are formed at the front footrest 62x. A side cover fitting portion 63 having a substantially constant width is formed at the outer edge of the front footrest 62x to extend downward. In the present embodiment, an outer surface (a surface directed upward) on which the foot of the rider can be placed of the footrest 62 is referred to as an outer surface of the footrest 62.

The rear footrest 62y is formed to extend in the right-and-left direction W and extend rearward and upward from the rear end of the front footrest 62x. A plurality of (two in the present example) connection portions 62d, 62e are formed at the rear footrest 62y. Through holes are formed at the connection portions 62a to 62e, respectively.

The sidewall 61 is formed to extend upward from the inner edge of the footrest 62. A plurality of (six in the present example) connection portions 64a, 64b, 64c, 64d, 64e, 64f are formed to further project upward from the upper end of the sidewall 61. Through holes are formed at the connection portions 64a to 64f, respectively. The connection portions 64b, 64c, 64d, 64e of the connection portions 64a to 64f are long holes in which the length in the front-and-rear direction L is larger than the length in the top-and-bottom direction H. A grommet made of rubber is attached to the long hole of each of the connection portions 64b, 64c, 64d, 64e.

The right footrest cover 60R is configured to be symmetrical with the left footrest cover 60L with respect to the vertical plane parallel to the top-and-bottom direction H and the front-and-rear direction L.

### (2-6) Lower Cover 70

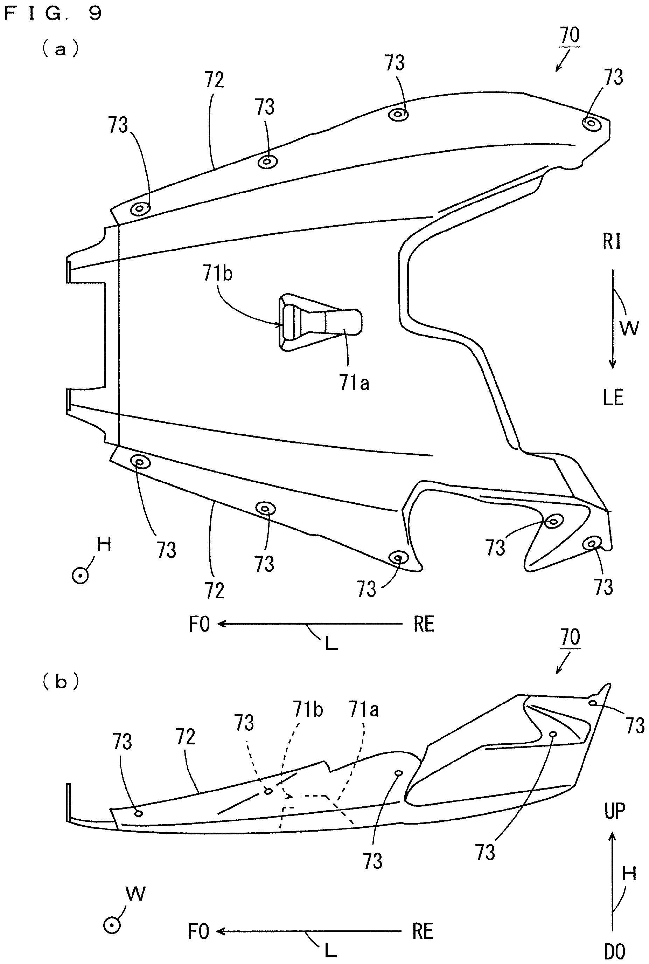

Fig. 9(a) is a plan view of the lower cover 70 of Fig. 1 as viewed from above, and Fig. 9(b) is a side view of the lower cover 70 of Fig. 1 as viewed from a position further leftward than the vehicle. As shown in Fig. 9(a), the lower cover 70 is a plate-shape member having a width that gradually increases rearward from the front. Further, the lower cover 70 is curved such that a central portion of the lower cover 70 in the right-and-left direction W is located at a position further downward than the both ends.

A plurality of (nine in the present example) connection portions 73 are formed in the vicinity of right and left side edges 72 of the lower cover 70. Through holes are formed at these connection portions 73, respectively. Further, a projection 71a directed upward is formed at a substantially central portion of the lower cover 70. A support piece insertion hole 71b is formed at the projection 71a. The support piece insertion hole 71b is formed such that the lower cover support piece 16 of Fig. 3 can be inserted.

### (2-7) Assembly Procedure of Body Cover 5

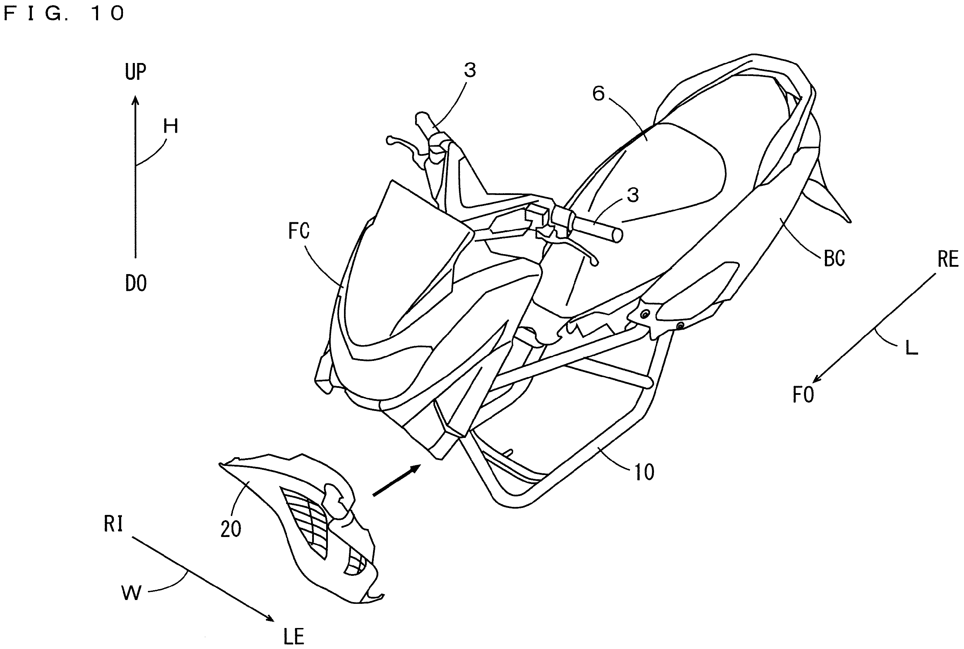

Figs. 10 to 15 are external perspective views showing the assembly procedure of the body cover 5 of Fig. 1. In the following description, the front cover FC, the right and left handles 3, the seat 6 and the rear cover BC are attached to the body frame 10 of Fig. 1 in an initial state.

Further, as shown in Fig. 10, the inner cover 20 is attached to the front end portion of the body frame 10. At the time of the attachment, the hook 19f of Fig. 3(b) is inserted into the through hole 25 of Fig. 4(a).

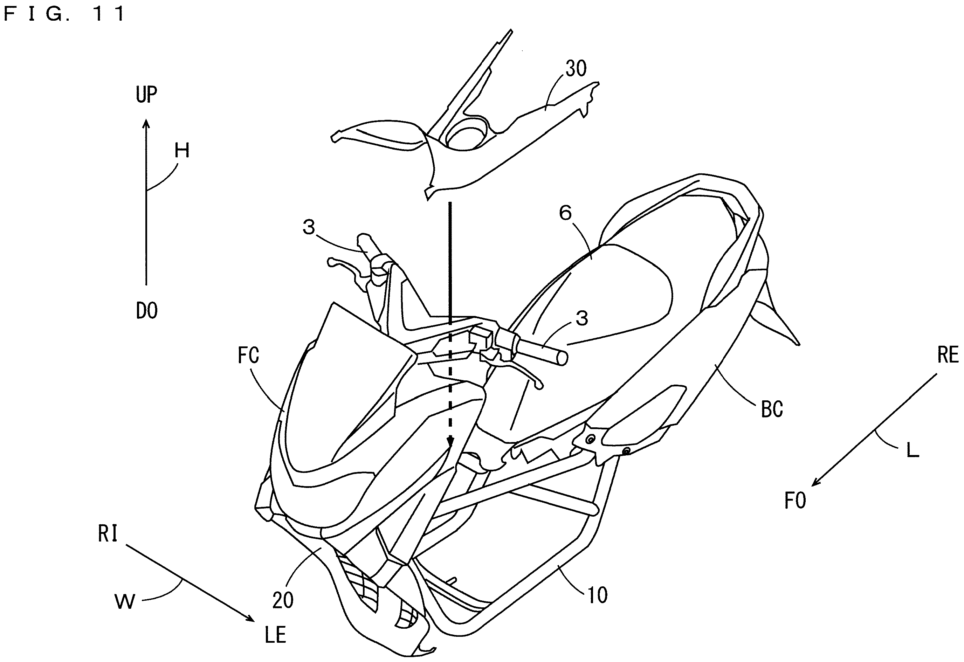

Next, as shown in Fig. 11, the upper cover 30 is attached between the front cover FC and the seat 6 from above. At the time of the attachment, the two connection portions 34 of the upper cover 30 of Figs. 5(a) and 5(b) are connected to the front cover FC using screws. Further, two connection portions 35 of the upper cover 30 of Figs. 5(a) and 5(b) are connected to the rear cover BC using screws. Thus, the upper cover 30 is fixed to the front cover FC and the rear cover BC.

Next, the left front side cover 50L and the left footrest cover 60L are connected to each other. At the time of the connection, the upper edge 52 of the left front side cover 50L of Fig. 7 is fitted into the side cover fitting portion 63 of the left footrest cover 60L of Fig. 8(b). Thus, the through holes of the connection portions 62a, 62c, 62d of Fig. 8(a) overlap with upper portions of the three support pieces 52a, 52b, 52c of Fig. 7(a), respectively. In this state, screws are inserted into the through holes of the connection portions 62a, 62c, 62d, and these screws are fitted into the support pieces 52a, 52b, 52c. In this manner, the left front side cover 50L and the left footrest cover 60L are connected to each other.

The right front side cover 50R and the right footrest cover 60R are also connected to each other in the similar procedure to the left front side cover 50L and the left footrest cover 60L.

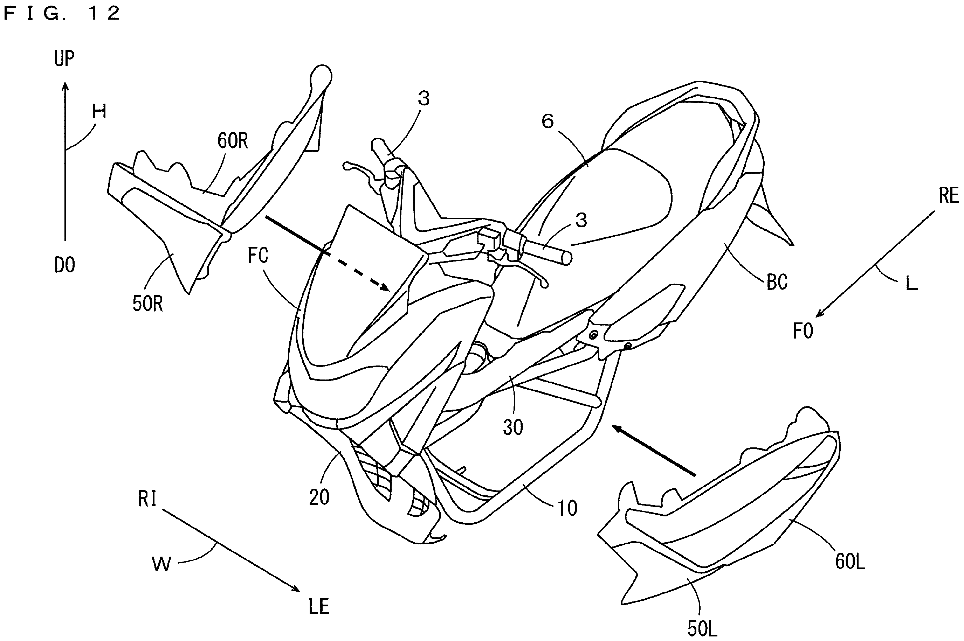

Next, as shown in Fig. 12, the left front side cover 50L and the left footrest cover 60L are attached to a left side portion of the body frame 10. Specifically, the connection portions 62b, 62e of the left footrest cover 60L of Figs. 8(a) and 8(b) are positioned to overlap with the cover fixing portions 14a, 14b of the body frame 10 of Figs. 3(a) and 3(b), respectively. In this state, screws are inserted into the through holes of the connection portions 62b, 62e, and these screws are fitted into the cover fixing portions 14a, 14b.

At this time, the connection portion 64f of the left footrest cover 60L of Figs. 8(a) and 8(b) overlaps with the cover fixing portion 13a of the body frame 10 of Figs. 3(a) and 3(b). Therefore, the connection portion 64f and the cover fixing portion 13a are connected to each other using a screw. In this manner, the left front side cover 50L and the left footrest cover 60L are fixed to the body frame 10.

The right front side cover 50R and the right footrest cover 60R are attached to a right side portion of the body frame 10 in the similar procedure to the left front side cover 50L and the left footrest cover 60L.

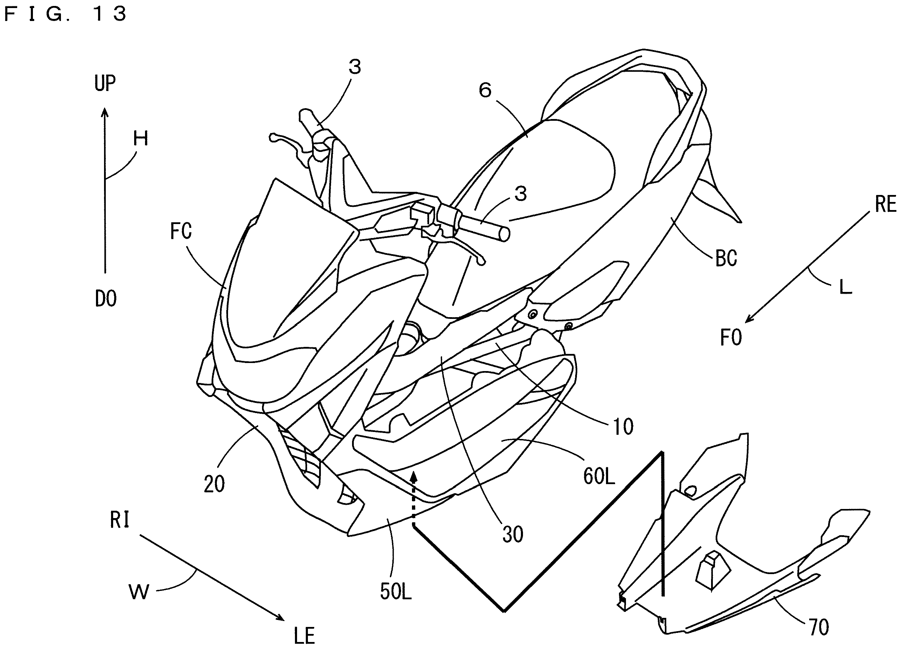

Next, as shown in Fig. 13, the lower cover 70 is attached to a lower portion of the body frame 10 from below. At the time of the attachment, the lower cover support piece 16 of Figs. 3(a) and 3(b) is inserted into the support piece insertion hole 71b of Figs. 9(a) and 9(b). Thus, the lower cover support piece 16 is supported by the body frame 10.

Further, parts of the plurality of connection portions 73 of the lower cover 70 of Figs. 9(a) and 9(b) are connected to the connection portions 53a, 53b of the right and left front side covers 50R, 50L (see Figs. 7(a) and 7(b)). Further, the rest of the plurality of connection portions 73 is connected to a lower portion of each of the right and left footrest covers 60R, 60L.

Next, the inner cover 20 is positioned such that each of the plurality of connection portions 29 of Figs. 4(a) and 4(b) overlaps with any one of the plurality of connection pieces 51a to 51d of Fig. 7(a). In this state, screws are inserted into the through holes in the plurality of connection portions 29, and the inserted screws are fitted into the plurality of connection pieces 51a to 51d, respectively. Thus, the inner cover 20 is fixed to the right and left front side covers 50R, 50L.

Finally, as shown in Fig. 14, the left side cover 40L is attached to the upper cover 30 and the left footrest cover 60L such that an opening between the upper cover 30 and the left footrest cover 60L is closed.

At the time of the attachment, the attachment pieces 43a to 43d of Fig. 6(a) are fitted into the through holes (long holes) of the connection portions 64a to 64e of Fig. 8(b) via grommets, respectively. Further, the plurality of ribs (not shown) formed inside of the upper edge of the left side cover 40L are fitted into the plurality of connection holes 39 of Figs. 5(a) and 5(b), respectively. Further, the connection portion 41b of Figs. 6(a) and 6(b) and the connection portion 64a of Figs. 8(a) and 8(b) are connected to each other using a screw. Further, the connection portion 41a of Figs. 6(a) and 6(b) is connected to the front cover FC using a screw. Further, the connection portion 42a of Figs. 6(a) and 6(b) is connected to the rear cover BC using a screw.

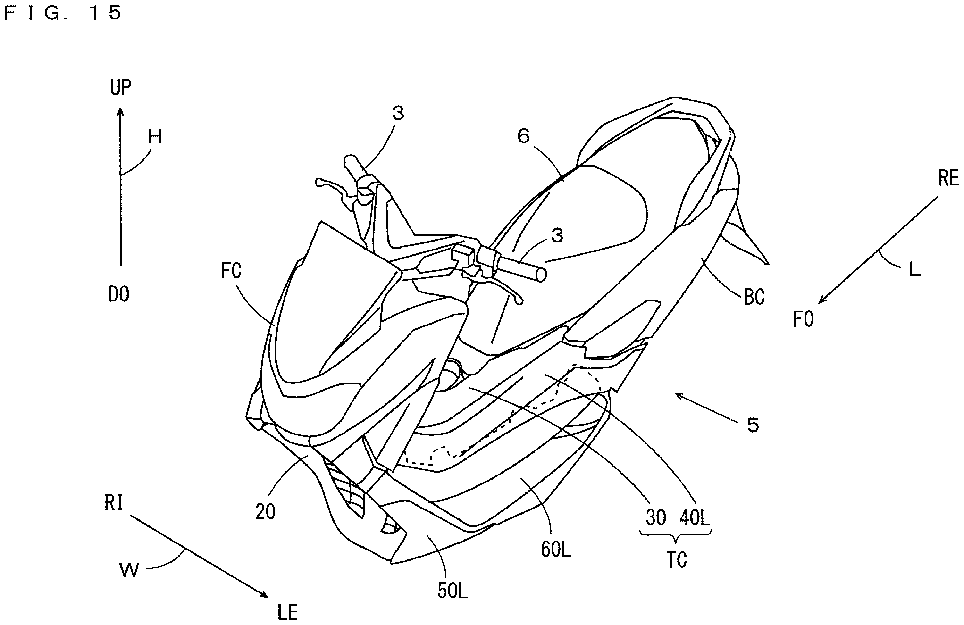

The right side cover 40R is attached to the upper cover 30 and the right footrest cover 60R in the similar procedure to the left side cover 40L. As a result, as shown in Fig. 15, the body cover 5 is completed. In this state, the lower ends of the right and left side covers 40R, 40L are located at positions further outward than the sidewalls 61 of the right and left footrest covers 60R, 60L, respectively.

### [3] Effect Acquired by Tunnel Cover TC

The tunnel cover TC is provided at the motorcycle 100 according to the present embodiment. The tunnel cover TC surrounds the space above an area between the right and left footrest covers 60R, 60L from above, and right and left sides. Various components (the above-mentioned right and left upper frames 13 and a fuel tank (not shown), for example) can be stored inside of the tunnel cover TC. Further, the lower ends of the right and left side covers 40R, 40L are located at positions further outward than the sidewalls 61 of the right and left footrest covers 60R, 60L, respectively, as described above. Therefore, it is possible to increase the size of the inner space of the tunnel cover TC without arranging the position of the footrest 62 of each of the right and left footrest covers 60R, 60L further outward. Thus, it is possible to arrange the right and left footrests 62 at appropriate positions while flexibility in layout of the components provided inside of the tunnel cover TC is ensured.

Further, the above-mentioned tunnel cover TC causes the right and left side covers 40R, 40L to be assembled last during the assembly of the body cover 5. Thus, the rider can easily attach and detach the right and left side covers 40R, 40L. The right and left side covers 40R, 40L are detached, so that the inside of the tunnel cover TC can be viewed through the opening between the upper cover 30 and each of the right and left footrest covers 60R, 60L. Therefore, maintenance of the vehicle main body 1 becomes easier.

### [4] Mechanism in which Water Led from Road Surface Flows to Right and Left Footrests

Here, when the motorcycle 100 travels on the wet road surface, the water led from the road surface sometimes flows out to the outer surfaces of the right and left footrests 62 from the gaps at the connection portions between the right and left side covers 40R, 40L and the right and left footrest covers 60R, 60L via the outer surfaces (the surface directed outward) of the right and left sidewalls 61. In this case, feet of the rider become polluted during the travelling of the motorcycle 100. This phenomenon occurs due to the below-mentioned mechanism.

When the motorcycle 100 travels on the wet road surface, the front wheel FW stirs up the water on the road surface, and splashes the water to a space behind the front wheel FW. The water splashed from the front wheel FW adheres to the surface of the inner cover 20 while receiving force in the rotation direction of the front wheel FW. The adhered water flows towards the upper end from below the inner cover 20 via the surface of the inner cover 20.

In this case, when the upper end of the inner cover 20 is located at a position further downward than the upper end of the front end opening FFO (Fig. 2) of the tunnel cover TC, the water that flows to the upper end of the inner cover 20 enters the inside of the tunnel cover TC from the front end opening FFO.

When the water that enters the inside of the tunnel cover TC adheres to the inner surfaces of the right and left side covers 40R, 40L, the adhered water flows downward via the inner surfaces of the right and left side covers 40R, 40L due to the effect of gravity. The water that flows downward is led to the connection portions between the right and left side covers 40R, 40L and the footrest covers 60R, 60L. The water led to the right and left connection portions flows out to the outer surfaces of the right and left footrests 62 via the outer surfaces of the right and left sidewalls 61 from the gaps at these connection portions.

It is found that the above-mentioned mechanism enables water to be inhibited from flowing out to the right and left footrests 62 from the gaps at the above-mentioned right and left connection portions by decreasing an amount of water that enters the front end opening FFO of the tunnel cover TC from the upper end of the inner cover 20.

Therefore, in the motorcycle 100 according to the present embodiment, the opening 22 that is opposite to the front wheel FW is formed at the inner cover 20.

### [5] Effects Acquired by Inner Cover 20

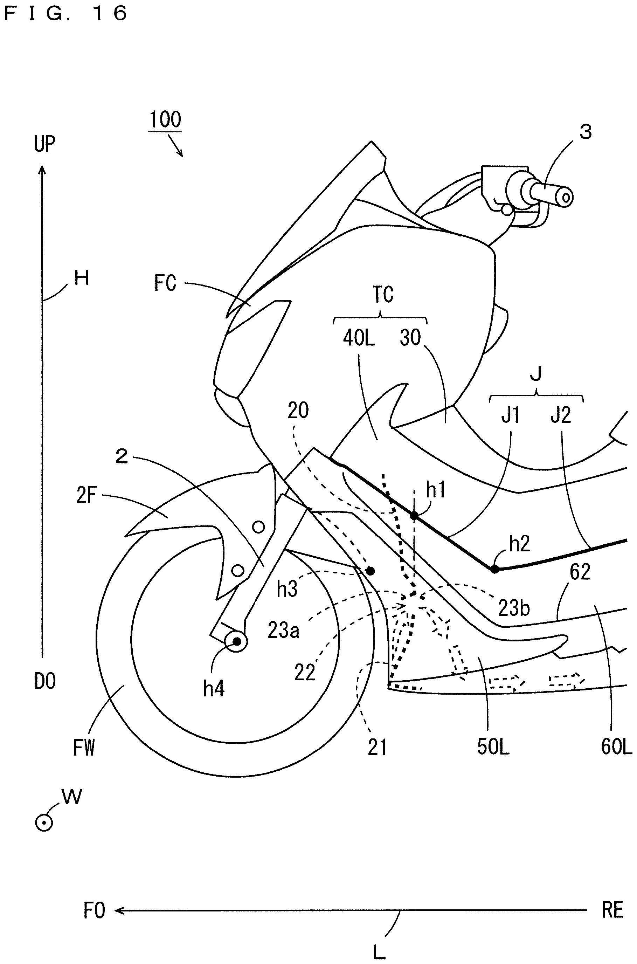

Fig. 16 is a partially enlarged side view of the motorcycle 100 of Fig. 1. Fig. 16 shows a side view of the front portion of the motorcycle 100 of Fig. 1 as viewed from a position further leftward than the vehicle. Further, the inner cover 20 is indicated by the thick dotted line in Fig. 16. Further, in Fig. 16, a connection portions J between the left side cover 40L and the left footrest cover 60L is indicated by the thick bold line. The connection portion J includes a front connection portion J1 and a rear connection portion J2.

As shown in Fig. 16, the opening 22 of the inner cover 20 is located at a position further downward than a portion h1 of each of the right and left connection portions J. The portion h1 of each of the right and left connection portions J corresponds to a position of the opening 22 in the front-and-rear direction L. That is, the opening 22 is located below the right and left connection portions J in a side view of the vehicle.

When the motorcycle 100 that includes the above-mentioned inner cover 20 travels on the wet road surface, the front wheel FW stirs up the water on the road surface, and splashes the water to a space behind the front wheel FW. The water splashed from the front wheel FW adheres to the water receiver 21 of the inner cover 20 while receiving the force in the rotation direction of the front wheel FW. The adhered water flows upward from below in the water receiver 21 of the inner cover 20 as indicated by the outlined dotted arrow in Fig. 16. The water that flows upward from below in the water receiver 21 is led into the opening 22 without reaching the upper end of the inner cover 20.

In this case, because the opening 22 is located below the right and left connection portions J in the side view of the vehicle, a large amount of water led to the opening 22 falls behind the inner cover 20 at a position below the right and left connection portions J. Therefore, because an amount of water that enters the front end opening FFO of the tunnel cover TC from the upper end of the inner cover 20 is decreased, water is unlikely to adhere to the inner surfaces of the right and left side covers 40R, 40L.

Thus, the water splashed from the front wheel FW is inhibited from being led to the right and left connection portions J. Therefore, water is inhibited from flowing out to the outer surfaces of the right and left footrests 62 from the gaps at the right and left connection portions J. As a result, feet of the rider is inhibited from becoming polluted by the water led from the road surface during the travelling of the motorcycle 100.

As shown in Fig. 16, each of the right and left front connection portions J1 extends rearward and downward from the front end of each of the right and left side covers 40R, 40L. Further, each of the right and left rear connection portions J2 extends rearward and upward from the rear end of each of the right and left front connection portions J1. In such a configuration, the opening 22 of the inner cover 20 is preferably located at a position further downward than the right and left front connection portions J1.

In this case, the water led to the opening 22 of the inner cover 20 from the road surface falls behind the inner cover 20 at a position further downward than the right and left front connection portions J1. Therefore, water is inhibited from flowing out to the outer surfaces of the right and left footrests 62 from the gaps at the right and left front connection portions J1.

The opening 22 of the inner cover 20 is more preferably located at a position even further downward than the lower end h2 of each of the right and left connection portions J. In this case, the water led from the road surface to the opening 22 of the inner cover 20 falls behind the inner cover 20 at a position further downward than the lower end h2 of each of the right and left connection portions J. Thus, water is inhibited from flowing out to the outer surfaces of the right and left footrests 62 from the gaps at the right and left connection portions J.

As described above, the front eave portion 23a is formed at the upper end of the opening 22 of the inner cover 20 to extend forward and downward. In this case, the water that flows upward from below in the water receiver 21 is caught by the inner surface of the front eave portion 23a, and is led to the opening 22. Thus, a larger amount of water that flows upward from below in the water receiver 21 is led to the opening 22.

Further, the rear eave portion 23b is formed at the upper end of the opening 22 of the inner cover 20 to extend rearward and downward. In this case, the water led from the road surface to the opening 22 of the inner cover 20 falls behind the inner cover 20 via the inner surface of the rear eave portion 23b. Thus, the water led rearward from the opening 22 of the inner cover 20 is inhibited from being splashed to a position further upward than the right and left connection portions J. Thus, because an amount of water led to the right and left connection portions J can be more sufficiently decreased, water is more sufficiently inhibited from flowing out from the gaps at the right and left connection portions J.

As shown in Fig. 16, the opening 22 of the inner cover 20 is preferably located at a position further downward than a rear lower end h3 of the front fender 2F in the side view of the vehicle. In this case, the water that cannot be caught by the front fender 2F can be led to the opening 22 of the inner cover 20 while an increase in size of the front fender 2F is inhibited. Thus, an increase in size of the front portion of the vehicle is inhibited, and water is inhibited from flowing out from the gaps at the right and left connection portions J.

Further, the opening 22 of the inner cover 20 is preferably located at a position further upward than an axle h4 of the front wheel FW. In this case, a large amount of water splashed from the front wheel FW can be led into the opening 22. Thus, an amount of water led to the right and left connection portions J can be more sufficiently decreased. As a result, water is more sufficiently inhibited from flowing out from the gaps at the right and left connection portions J.

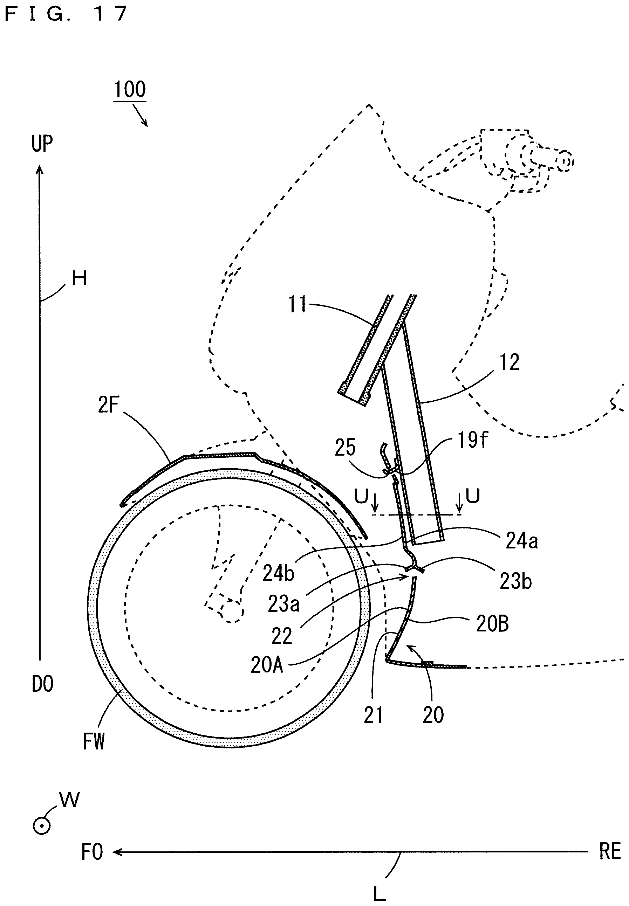

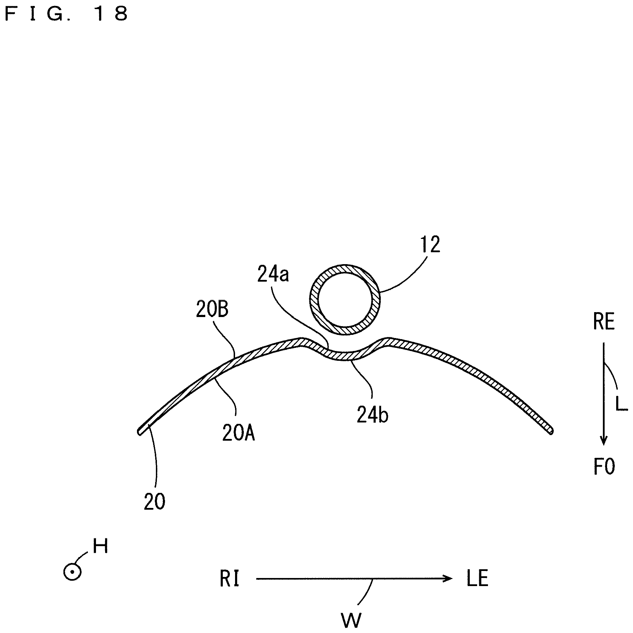

Fig. 17 is a cross sectional view of the motorcycle 100 cut along a vertical plane including the line K-K of Fig. 2. In Fig. 17, end surfaces of the head pipe 11, the down frame 12 and the inner cover 20 are mainly shown. Fig. 18 is a cross sectional view of the down frame 12 and the inner cover 20 cut along a horizontal plane including the line U-U of Fig. 17.

As shown in Figs. 4(a), 4(b), 17 and 18, the concave portion 24a that extends in the top-and-bottom direction H is formed at a position opposite to the front surface of a lower portion of the down frame 12 at the back surface 20B of the inner cover 20. In this case, the inner cover 20 can be arranged at a position even further rearward while a clearance is provided between the down frame 12 and the concave portion 24a. Therefore, a large space can be ensured between the front surface 20A of the inner cover 20 and the front wheel FW. Thus, because the size of a region in which the front fork 2 and the front wheel FW of Fig. 1 are rotatable can be increased, an increase in size of the front portion of the vehicle can be inhibited.

Further, the opening 22 of the inner cover 20 is located at a position further downward than the convex portion 24b formed at the front surface 20A. Thus, when the motorcycle 100 travels on the wet road surface, the water that flows upward from below in the water receiver 21 is led into the opening 22 without reaching the convex portion 24b. Thus, the water caught in the water receiver 21 is inhibited from being splashed towards the upper end of the inner cover 20 by colliding with the convex portion 24b. Therefore, water is inhibited from flowing out from the gaps at the right and left connection portions J.

### [6] Grooves Provided at Right and Left Connection Portions J

When the motorcycle 100 travels on the wet road surface, it is not limited to that all of the water splashed from the front wheel FW to the inner cover 20 is led to the opening 22. Part of the water splashed from the front wheel FW is sometimes led to the upper end of the inner cover 20. The water led to the upper end of the inner cover 20 enters the inside of the tunnel cover TC from the front end opening FFO (Fig. 2) of the tunnel cover TC as described above. When the water that enters the inside of the tunnel cover TC adheres to the inner surfaces of the right and left side covers 40R, 40L, the adhered water is led to the right and left connection portions J.

Therefore, in the present embodiment, the right and left footrest covers 60R, 60L have the below-mentioned configuration such that the water led to the right and left connection portions J can be prevented from flowing out to the outer surfaces of the right and left footrests 62.

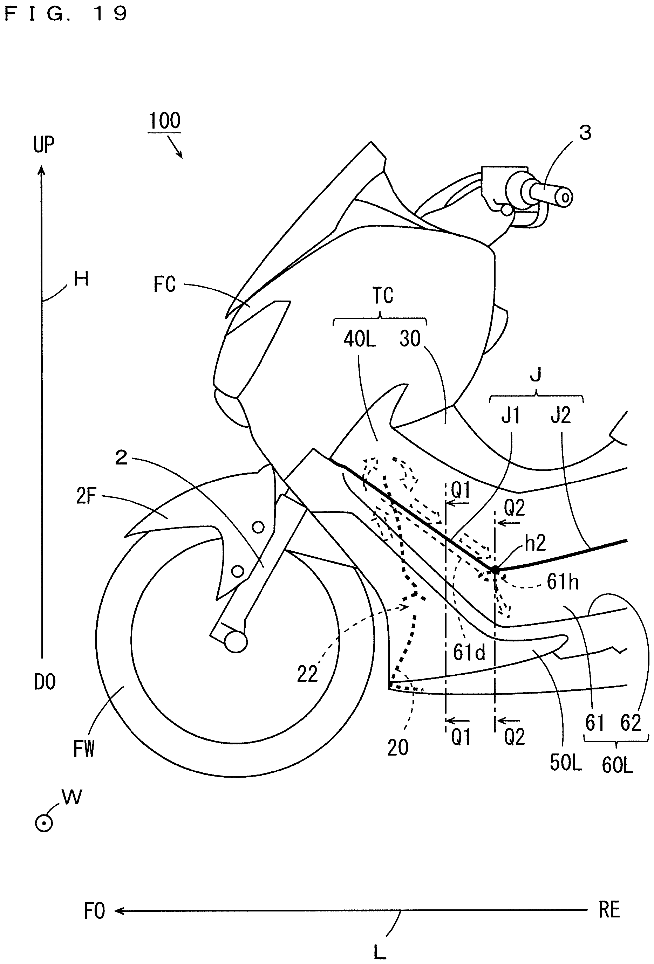

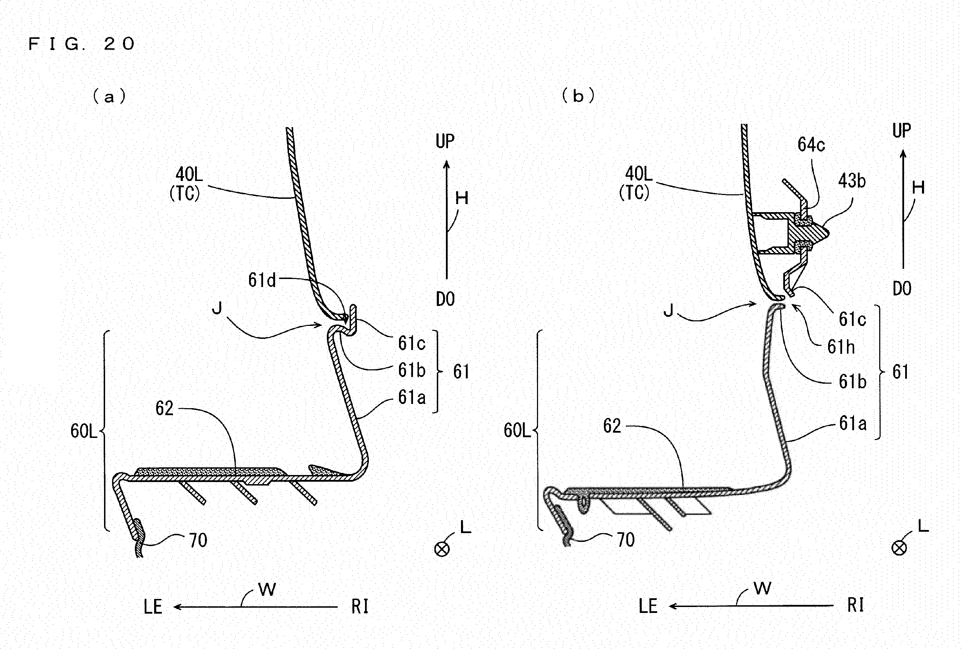

Fig. 19 is a partially enlarged side view of the motorcycle 100 of Fig. 1. Fig. 19 shows a side view of the front portion of the motorcycle 100 of Fig. 1 as viewed from a position further leftward than the vehicle. Further, Fig. 20(a) is a cross sectional view of the left side cover 40L and the left footrest cover 60L cut along a vertical plane including the Q1-Q1 of the Fig. 19, and Fig. 20(b) is a cross sectional view of the left side cover 40L and the left footrest cover 60L cut along a vertical plane including the Q2-Q2 line of Fig. 19.

As shown in Figs. 19 and 20(a), the sidewall 61 of the left footrest cover 60 of the present example has a first portion 61a, a second portion 61b and a third portion 61c. The first portion 61a extends upward from the inner edge of the footrest 62. The second portion 61b extends inward and downward from the upper end of the first portion 61a. The third portion 61c extends upward from the lower end of the second portion 61b.

A groove 61d is formed of the second portion 61b and the third portion 61c. Here, the size and the shape of the second portion 61b are set such that the bottom of the groove 61d is not visible when the rider views the left connection portion J from a position further leftward than the vehicle, for example.

As shown in Fig. 19, the groove 61d is formed to be inclined rearward and downward from the front along the front connection portion J1. Further, as shown in Figs. 19 and 20(b), a through hole 61h is formed at the lower end of the groove 61d.

The above-mentioned configuration causes the water led to the right and left connection portions J via the inner surfaces of the right and left side covers 40R, 40L to be caught by the right and left grooves 61d as indicated by the dotted outlined arrow in Fig. 19 even when water enters the inside of the tunnel cover TC.

Further, the water caught by the right and left grooves 61d is discharged to a space further inward than the right and left side covers 40R, 40L through the right and left through holes 61h after flowing rearward and downward from the front. Thus, the water led to the right and left grooves 61d falls on the lower cover 70 without overflowing from the right and left grooves 61d. As a result, water is inhibited from flowing out to the outer surfaces of the right and left footrests 62.

### [7] Effects of Embodiments

As described above, the right and left side covers 40R, 40L are connected to the right and left footrest covers 60R, 60L, respectively, such that the lower ends of the right and left side covers 40R, 40L are located at positions further outward than the sidewalls 61 of the right and left footrest covers 60R, 60L. Thus, it is possible to increase the size of the inner space of the tunnel cover TC without arranging the positions of the right and left footrests 62 further outward. Therefore, it is possible to inhibit a decrease in comfort of the right and left footrests 62 while flexibility in layout of the components provided inside of the tunnel cover TC is ensured.

Further, in the present embodiment, the opening 22 opposite to the front wheel FW is formed at the inner cover 20. Thus, when the motorcycle 100 travels on the wet road surface, the water splashed from the front wheel FW towards the inner over 20 is led into the opening 22 without reaching the upper end of the inner cover 20. The opening 22 of the inner cover 20 is located below the right and left connection portions J in the side view of the vehicle. In this case, a large amount of water led to the opening 22 of the inner cover 20 falls behind the inner cover 20 at a position further downward than the right and left connection portions J. Therefore, water is unlikely to adhere to the inner surfaces of the right and left side covers 40R, 40L.

Thus, water is inhibited from being led to the right and left connection portions J from the road surface. Therefore, water is inhibited from flowing out to the outer surfaces of the right and left footrests 62 from the gaps at connection portions J.

### [8] Other Embodiments

(8-1) In the above-mentioned embodiment, the front cover FC, the inner cover 20, the upper cover 30, the right and left side covers 40R, 40L, the right and left front side covers 50R, 50L, the right and left footrest covers 60R, 60L, the lower cover 70 and the rear cover BC that constitute the body cover 5 are separately respectively formed. However, it is sufficient for the body cover 5 of the preferred embodiment that at least the right and left footrest covers 60R, 60L and the tunnel cover TC are separately formed, and it is not limited to the example of the above-mentioned embodiment.

When the front cover FC, the upper cover 30 and the right and left side covers 40R, 40L are fabricated of the same resin material, at least two of the front cover FC, the upper cover 30 and the right and left side covers 40R, 40L may be integrally formed. For example, the upper cover 30, and the right and left side covers 40R, 40L may be integrally formed.

Further, when the inner cover 20, the right and left front side covers 50R, 50L, the right and left footrest covers 60R, 60L and the lower cover 70 are fabricated of the same resin material, at least two of the inner cover 20, the right and left front side covers 50R, 50L, the right and left footrest covers 60R, 60L and the lower cover 70 may be integrally formed. For example, the left front side cover 50L and the left footrest cover 60L may be integrally formed, and the right front side cover 50R and the right footrest cover 60R may be integrally formed. Further, the inner cover 20, and the right and left front side covers 50R, 50L may be integrally formed.

Further, part of or all of the front cover FC, the inner cover 20, the upper cover 30, the right and left side covers 40R, 40L, the right and left front side covers 50R, 50L, the right and left footrest covers 60R, 60L, the lower cover 70 and the rear cover BC, described above, may be constituted by a plurality of members, respectively.

When a specific cover member of the plurality of cover members is constituted by the plurality of members, part of the members that constitutes the specific cover member may be integrally formed with another cover member. For example, when each of the right and left side covers 40R, 40L is constituted by the plurality of members, part of the members that constitutes the right and left side covers 40R, 40L, and the upper cover 30 or the front cover FC may be integrally formed. For example, when each of the right and left front side covers 50R, 50L is constituted by the plurality of members, part of the members that constitutes the right and left front side covers 50R, 50L, and the right and left footrest covers 60R, 60L may be integrally formed.
(8-2) The one opening 22 is formed at the central portion of the inner cover 20 in the right-and-left direction W in the above-mentioned embodiment. Alternatively, a plurality of (two or three, for example) openings 22 that are opposite to the front wheel FW may be formed at the inner cover 20. Further, the plurality of openings may be arranged to line up in the top-and-bottom direction H, or may be arranged to line up in the right-and-left direction W.
   Further, the front eave portion 23a and the rear eave portion 23b may be provided above a part or all of the openings 22. In this case, a larger amount of water caught by the water receiver 21 can be efficiently led to the plurality of openings 22.
(8-3) In the above-mentioned embodiment, the front eave portion 23a is provided to extend forward and downward from the upper end of the opening 22 of the inner cover 20. The configuration of the front eave portion 23a and the position at which the front eave portion 23a is provided are not limited to the above-mentioned example.

In the preferred embodiment, the front eave portion 23a only has to have a function that catches the water that flows upward from below in the water receiver 21 on a region opposite to the front wheel FW, and leads the caught water to the opening 22.

For example, if the front eave portion 23a has the above-mentioned function, the front eave portion 23a may be formed to extend downward after extending forward from the upper end of the opening 22 of the inner cover 20. Further, the front eave portion 23a only has to be provided above the opening 22 in the front view of the vehicle, and may be provided to extend forward and downward from a position further upward than the upper end of the opening 22 by a small distance (about a few centimeters).

Further, in the above-mentioned embodiment, the rear eave portion 23b is provided to extend rearward and downward from the upper end of the opening 22 of the inner cover 20. The configuration of the rear eave portion 23b and the position at which the rear eave portion 23b is provided are not limited to the above-mentioned example.

In the preferred embodiment, the rear eave portion 23b only has to have a function that makes the water that is led to a position behind the inner cover 20 from the opening 22 fall downward.

For example, if the rear eave portion 23b has the above-mentioned function, the rear eave portion 23b may be formed to extend downward after extending rearward from the upper end of the opening 22 of the inner cover 20. Further, the rear eave portion 23b only has to be provided above the opening 22 in the front view of the vehicle, and may be provided to extend rearward and downward from a position further upward than the upper end of the opening 22 by a small distance (about a few centimeters).
(8-4) The front eave portion 23a and the rear eave portion 23b are integrally formed with the inner cover 20 in the above-mentioned embodiment. Alternatively, the front eave portion 23a and the rear eave portion 23b may be separately formed from the inner cover 20.
(8-5) While the gas introduction sections 28 are provided on the right and left sides of the water receiver 21 of the inner cover 20 in the above-mentioned embodiment, the right and left gas introductions section 28 do not have to be present when it is not necessary to lead air to the inside of the body cover 5.
(8-6) The water receiver 21, the opening 22, the convex portion 24b and the through hole 25 are formed in this order upward from below at the central portion of the front surface 20A of the inner cover 20 in the above-mentioned embodiment. Alternatively, it is sufficient for the inner cover 20 to have the water receiver 21 and the opening 22 at least at portions opposite to the front wheel FW.
(8-7) The above-mentioned embodiment is an example in which the present teaching is applied to the motorcycle. The above-mentioned embodiment can be applied to a saddle-straddling type motor vehicle. The present teaching may be applied to the saddle-straddling type motor vehicle such as a four-wheeled automobile or a three-wheeled automobile.
(8-8) In the above-mentioned embodiment, the vehicle main body 1 is constituted by the body frame 10, the body cover 5, the seat 6, the swing arm unit 4 and the rear wheel BW. However, the vehicle main body 1 is not limited to the above-mentioned embodiment. Alternatively, it is sufficient for the vehicle main body 1 to include at least the seat 6 and the body cover 5. In the above-mentioned embodiment, the vehicle main body 1 includes the swing arm unit 4 as a driving source. However, according to the present teaching, the vehicle main body 1 may include an engine fixed to the body frame 10 as a driving source, or may include an electric motor instead of the engine.
(8-9) In the above-mentioned embodiment, the head pipe 11, the down frame 12, the right and left upper frames 13, the right and left lower frames 14 are welded to one another such that the body frame 10 is fabricated. These frame members are tubular.
   Alternatively, part of or all of the plurality of frame members that constitute the body frame 10 may have a square tube-shape. Further, in the body frame 10, a part or all of the plurality of frame members may be connected by a bolt and a nut instead of being welded. Further, the number and the shape of the plurality of frame members that constitute the body frame 10 are not limited to the above-mentioned example. Further, the body frame 10 may include a frame member fabricated by casting or forging.
(8-10) The above-mentioned embodiment described that various components (the above-mentioned right and left upper frames 13 and a fuel tank (not shown), for example) can be stored inside of the tunnel cover TC. Alternatively, a vehicle mount component such as a battery and a control unit other than the fuel tank may be stored, or a power unit may be stored inside of the tunnel cover TC. Further, the inside of the tunnel cover TC may be utilized as a storage space such as a storage box.

### [9] Correspondences between Constituent Elements in Claims and Parts in Preferred Embodiments

In the following paragraphs, non-limiting examples of correspondences between various elements recited in the claims below and those described above with respect to various preferred embodiments are explained.

In the above-mentioned embodiment, the seat 6 is an example of a seat, the body cover 5 is an example of a body cover, the vehicle main body 1 is an example of a main body, the front fork 2 is an example of a front fork, the front wheel FW is an example of a front wheel, the right and left footrest covers 60R, 60L are examples of right and left footrest covers, the inner cover 20 is an example of an inner cover, the tunnel cover TC is an example of a tunnel cover and the front end opening FFO is an example of a front end opening.

Further, the upper cover 30 is an example of an upper cover, the right and left side covers 40R, 40L are examples of right and left side covers, the footrest 62 is an example of a footrest, the sidewall 61 is an example of a sidewall, the opening 22 is an example of an opening, the connection portion J is an example of a connection portion and the motorcycle 100 is an example of a saddle-straddling type motor vehicle.

Further, the front connection portion J1 is an example of a front connection portion, the rear connection portion J2 is an example of a rear connection portion, the front eave portion 23a is an example of a front eave portion, the rear eave portion 23b is an example of a rear eave portion, the front fender 2F is an example of a front fender, the rear lower end h3 of the front fender 2F is an example of a rear lower end of the front fender, and the axle h4 of the front wheel FW is an example of an axle of the front wheel.

Further, the head pipe 11 is an example of a head pipe, the down frame 12 is an example of a down frame, the front surface 20A is an example of a front surface, the back surface 20B is an example of a back surface, the concave portion 24a is an example of a concave portion, the convex portion 24b is an example of a convex portion, the first portion 61a is an example of a first portion, the second portion 61b is an example of a second portion, the third portion 61c is an example of a third portion, the groove 61d is an example of a groove and the through hole 61h is an example of an discharge hole.

### INDUSTRIAL APPLICABILITY

The present invention can be effectively utilized for various saddle-straddling type motor vehicles.

## Claims

1. A saddle-straddling type motor vehicle comprising:
a main body (1) that includes a seat (6) and a body cover (5);
a front fork (2) rotatably provided at a portion of the main body (1) located at a position further forward than the seat (6); and
a front wheel (FW) rotatably supported at a lower end of the front fork (2), wherein the body cover (5) includes
right and left footrest covers (60R,60L) that extend in a vehicle front-and-rear direction at positions further downward than the seat (6),
an inner cover (20) that has a part opposite to the front wheel (FW) at a position further rearward than the front wheel (FW) and further forward than the right and left footrest covers (60R,60L), and
a tunnel cover (TC) provided to surround a space above an area between the right and left footrest covers (60R,60L) from above and right and left sides, at a position further rearward than the inner cover (20) and further forward than the seat (6),
an upper end of the inner cover (20) is located at a position further downward than an upper end of a front end opening (FFO) of the tunnel cover (TC),
the tunnel cover (TC) includes
an upper cover (30) that extends in the vehicle front-and-rear direction at a position further upward than the right and left footrest covers (60R,60L), and
right and left side covers (40R,40L) that extend in the vehicle front-and-rear direction and extend downward from edges on both sides of the upper cover (30),
each of the right and left footrest covers (60R,60L) includes
a footrest (62) that extends in a vehicle right-and-left direction, and
a sidewall (61) that extends upward from an inner edge of the footrest (62), each of the sidewalls (61) has a first portion (61a), a second portion (61b) and a third portion (61c), the first portion (61a) extends upward from the inner edge of the footrest (62), the second portion (61b) extends inward from the upper end of the first portion (61a), the third portion (61c) extends upward from the lower end of the second portion (61b), the right and left side covers (40R,40L) are connected to the right and left footrest covers (60R,60L), respectively, such that lower ends of the right and left side covers (40R,40L) are located at positions further outward than the third portions (61c) of the right and left sidewalls (61), respectively,
the inner cover (20) has an opening (22) that is opposite to the front wheel (FW), and the opening (22) is located below right and left connection portions (J) between the right and left side covers (40R,40L) and the right and left footrest covers (60R,60L) in a side view of the vehicle,
in each of the sidewalls (61) a groove (61d) that extends in the vehicle front-and-rear direction is formed by the second portion (61b) and the third portion (61c), and the lower ends of the right and left side covers (40R,40L) are arranged above the grooves (61d) formed by the second portion (61b) and the third portion (61c), respectively, each of the grooves (61d) is formed to be inclined rearward and downward from a front,
**characterized in that**
the second portion (61b) of each of the sidewalls (61) further extends downward from the upper end of the respective first portion (61a), and a discharge hole (61h) through which water caught by the respective groove (61d) is adapted to be discharged to a space further inward than the right and left footrest covers (60R,60L) is formed at a lower end of each groove (61d).

2. A saddle-straddling type motor vehicle according to claim 1, **characterized in that** each of the connection portions (J) includes
a front connection portion (J1) that extends rearward and downward from a front end, and
a rear connection portion (J2) that extends rearward and upward from a rear end of the front connection portion (J1), and
the opening (22) of the inner cover (20) is located at a position further downward than the front connection portions (J1).

3. A saddle-straddling type motor vehicle according to claim 1 or 2, **characterized in that** a front eave portion (23a) is provided above the opening (22) in the inner cover (20) in a front view of the vehicle, and
the front eave portion (23a) extends forward and downward from a position above the opening (22).

4. A saddle-straddling type motor vehicle according to any one of claims 1 to 3,
**characterized in that** a rear eave portion (23b) is provided above the opening (22) in the inner cover (20) in a front view of the vehicle, and the rear eave portion (23b) extends rearward and downward from the position above the opening (22).

5. A saddle-straddling type motor vehicle according to any one of claims 1 to 4,
**characterized by** a front fender (2F) attached to the front fork (2), wherein the opening (22) of the inner cover (20) is located behind the front wheel (FW) to be opposite to the front wheel (FW), and is located at a position further downward than a rear lower end of the front fender (2F) in the side view of the vehicle.

6. A saddle-straddling type motor vehicle according to any one of claims 1 to 5,
**characterized in that** the opening (22) of the inner cover (20) is located at a position further upward than an axle of the front wheel (FW).

7. A saddle-straddling type motor vehicle according to any one of claims 1 to 6,
**characterized in that** the main body (1) further includes
a head pipe (11), and
a down frame (12) that extends downward from the head pipe (11),
the part of the inner cover (20) is located between the front wheel (FW) and the down frame (12),
the inner cover (20) has a front surface (20A) and a back surface (20B),
a concave portion (24a) that extends in a top-and-bottom direction is formed at the back surface (20B) of the inner cover (20), and a convex portion (24b) that corresponds to the concave portion (24a) is formed at the front surface (20A) of the inner cover (20), and the opening (22) of the inner cover (20) is located at a position further downward than the convex portion (24b).

## Patentansprüche

1. Ein Sattel-Spreiz-Sitz-Typ-Motorfahrzeug, das umfasst:
einen Hauptkörper (1), der einen Sitz (6) und eine Körper-Abdeckung (5) beinhaltet;
eine Vorder-Gabel (2), die drehbar an einem Abschnitt des Hauptkörpers (1) vorgesehen ist, der an einer Position weiter vorne als der Sitz (6) angeordnet ist; und
ein Vorder-Rad (FW), das drehbar an einem unteren Ende der Vorder-Gabel (2) gelagert ist, wobei die Körper-Abdeckung (5) beinhaltet
rechte und linke Fußablage-Abdeckungen (60R, 60L), die sich in eine Fahrzeug-Vorder-und-Rück-Richtung an Position weiter unten als der Sitz (6) erstrecken,
eine Innen-Abdeckung (20), die einen Teil, gegenüber zu dem Vorder-Rad (FW) hat, an einer Position weiter hinten als das Vorder-Rad (FW) und weiter vorne als die rechten und linken Fußablage-Abdeckungen (60R, 60L), und
eine Tunnel-Abdeckung (TC), die vorgesehen ist, um einen Raum oberhalb eines Bereichs zwischen den rechten und linken Fußablage-Abdeckungen (60R, 60L) von oben und rechten und linken Seiten zu umgeben, an einer Position, weiter hinten als die Innen-Abdeckung (20) und weiter vorne als der Sitz (6),
ein oberes Ende der Innen-Abdeckung (20) ist an einer Position, weiter unten als ein oberes Ende einer Vorder-End-Öffnung (FFO) der Tunnel-Abdeckung (TC) angeordnet,
die Tunnel-Abdeckung (PC) beinhaltet
eine obere Abdeckung (30), die sich in der Fahrzeug-Vorder-und-Rück-Richtung an einer Position, weiter oben als die rechten und linken Fußablage-Abdeckungen (60R, 60L) erstreckt, und
rechte und linke Seiten-Abdeckungen (40R, 40L), die sich in die Fahrzeug-Vorder-und-Rück-Richtung erstrecken, und sich nach unten von Kanten, an beiden Seiten der oberen Abdeckung (30), erstrecken, jede der rechten und linken Fußablage-Abdeckungen (60R, 60L) beinhaltet
eine Fußablage (62), die sich in eine Fahrzeug-Rechts-und-Links-Richtung erstreckt, und
eine Seiten-Wand (61), die sich nach oben von einer Innen-Kante der Fußablage (62) erstreckt, jede von den Seiten-Wänden (61) hat einen ersten Abschnitt (61a), einen zweiten Abschnitt (61b) und einen dritten Abschnitt (61c), der erste Abschnitt (61a) erstreckt sich nach oben von der Innen-Kante der Fußablage (62), der zweite Abschnitt (61b) erstreckt sich nach innen von dem oberen Ende des ersten Abschnitts (61a), der dritte Abschnitt (61c) erstreckt sich nach oben von dem unteren Ende des zweiten Abschnitts (61b), die rechte und linke Seiten-Abdeckungen (40R, 40L) sind jeweils mit den rechten und linken Fußablage-Abdeckungen (60R, 60L) verbunden, sodass untere Ende der rechten und linken Seiten-Abdeckungen (40R, 40L) jeweils an Positionen angeordnet sind, weiter außen als die dritten Abschnitte (61c) der rechten und linken Seiten-Wände (61),
die Innen-Abdeckung (20) hat eine Öffnung (22), die gegenüber zu dem Vorder-Rad (FW) ist, und die Öffnung (22) ist unterhalb rechter und linker Verbindungs-Abschnitte (J) zwischen den rechten und linken Seiten-Abdeckungen (40R, 40L) und den rechten und linken Fußablage-Abdeckungen (60R, 60L) in einer Seiten-Ansicht des Fahrzeugs angeordnet,
in jeder der Seiten-Wände (61) ist eine Nut (61d), die sich in die Fahrzeug-Vorder-und-Rück-Richtung erstreckt, durch den zweiten Abschnitt (61b) und dem dritten Abschnitt (61c) ausgebildet, und die unteren Enden der rechten und linken Seiten-Abdeckungen (40R, 40L) sind jeweils oberhalb der Nuten (61d), welche durch den zweiten Abschnitt (61b) und den dritten Abschnitt (61c) ausgebildet sind, angeordnet, jede von den Nuten (61d) ist ausgebildet, um nach hinten und unten von vorne geneigt zu sein,
**dadurch gekennzeichnet, dass**
der zweite Abschnitt (61b) von jeder von den Seiten-Wänden (61) sich weiter nach unten von dem oberen Ende des jeweiligen ersten Abschnitts (61a) erstreckt, und ein Abgabeloch (61H) durch welches Wasser, eingefangen durch die jeweilige Nut (61d), ist angepasst, um es in einen Raum weiter nach innen als die rechten und linken Fußablage-Abdeckungen (61R, 61L) abzugeben, ist an einem unteren Ende von jeder Nut (61d) ausgebildet.

2. Ein Sattel-Spreiz-Sitz-Typ-Motorfahrzeug gemäß Anspruch 1, **dadurch gekennzeichnet, dass** jeder von den Verbindungs-Abschnitten (J) beinhaltet einen vorderen Verbindungs-Abschnitt (J1), der sich nach hinten und unten von einem Vorder-Ende erstreckt und
einen hinteren Verbindungs-Abschnitt (J2), der sich nach hinten und oben von einem Rück-Ende des vorderen Verbindungs-Abschnitts (J1) erstreckt, und
die Öffnung (22) der Innen-Abdeckung (20) ist an einer Position weiter unten als die vorderen Verbindungs-Abschnitte (J1) angeordnet.

3. Ein Sattel-Spreiz-Sitz-Typ-Motorfahrzeug gemäß Anspruch 1 oder 2, **dadurch gekennzeichnet, dass** ein vorderer Trauf-Abschnitt (23a) oberhalb der Öffnung (22) in der Innen-Abdeckung (20) in einer Vorder-Ansicht des Fahrzeugs vorgesehen ist, und
der vordere Trauf-Abschnitt (23a) erstreckt sich nach vorne und nach unten von einer Position oberhalb der Öffnung (22).

4. Ein Sattel-Spreiz-Sitz-Typ-Motorfahrzeug gemäß irgendeinem der Ansprüche 1 bis 3, **dadurch gekennzeichnet, dass** ein hinterer Trauf-Abschnitt (23B) oberhalb der Öffnung (22) in der Innen-Abdeckung (20) in einer Vorder-Ansicht des Fahrzeugs vorgesehen ist, und
der hintere Trauf-Abschnitt (23B) erstreckt sich nach hinten und nach unten von der Position oberhalb der Öffnung (22).

5. Ein Sattel-Spreiz-Sitz-Typ-Motorfahrzeug gemäß irgendeinem der Ansprüche 1 bis 4, **gekennzeichnet durch** einen vorderen Kotflügel (2F), der an der Vorder-Gabel (2) angebracht ist, wobei die Öffnung (22) der Innen-Abdeckung (20) hinter dem Vorder-Rad (FW) angeordnet ist, um gegenüber zu dem Vorder-Rad (FW) zu sein, und ist an einer Position weiter unten als ein hinteres unteres Ende des vorderen Kotflügels (2F) in der Seiten-Ansicht des Fahrzeugs angeordnet.

6. Ein Sattel-Spreiz-Sitz-Typ-Motorfahrzeug gemäß irgendeinem der Ansprüche 1 bis 5, **dadurch gekennzeichnet, dass** die Öffnung (22) der Innen-Abdeckung (20) an einer Position weiter oben als eine Achse des Vorder-Rads (FW) angeordnet ist.

7. Ein Sattel-Spreiz-Sitz-Typ-Motorfahrzeug gemäß irgendeinem der Ansprüche 1 bis 6, **dadurch gekennzeichnet, dass** der Hauptkörper (1) weiter beinhaltet
ein Kopf-Rohr (11), und
einen Unter-Rahmen (12), der sich nach unten von dem Kopf-Rohr (11) erstreckt, der Teil der Innen-Abdeckung (20) ist zwischen dem Vorder-Rad (FW) und dem Unter-Rahmen (12) angeordnet,
die Innen-Abdeckung (20) hat eine Vorder-Fläche (20A) und eine Rück-Fläche (20B), ein konkaver Abschnitt (24a), der sich in eine Oben-und-Unten-Richtung erstreckt, ist an der Rück-Fläche (20B) der Innen-Abdeckung (20) ausgebildet, und ein konvexer Abschnitt (24b), welcher dem konkaven Abschnitt (24A) entspricht, ist an der Vorder-Fläche (20A) der Innen-Abdeckung (20) ausgebildet, und
die Öffnung (22) der Innen-Abdeckung (20) ist an einer Position weiter unten als der konvexe Abschnitt (24B) angeordnet.

## Revendications

1. Véhicule à moteur du type avec selle à enfourcher, comprenant :
un corps principal (1) qui comprend un siège (6) et un carénage de châssis (5) ;
une fourche avant (2) pourvue de manière rotative sur une portion du corps principal (1) qui se trouve à une position plus en avant que le siège (6) ; et
une roue avant (FW) supportée de manière rotative à une extrémité inférieure de la fourche avant (2),
dans lequel
le carénage de châssis (5) comprend
des carénages de repose-pied droit et gauche (60R, 60L) qui s'étendent en direction avant-arrière du véhicule à des positions plus basses que le siège (6),
un carénage interne (20) qui comporte une partie opposée à la roue avant (FW) à une position plus en arrière que la roue avant (FW) et plus en avant que les carénages de repose-pied droit et gauche (60R, 60L), et
un carénage de tunnel (TC) agencé pour entourer un espace au-dessus d'une zone entre les carénages de repose-pied droit et gauche (60R, 60L) depuis le dessus et les côtés droit et gauche, à une position plus en arrière que le carénage interne (20) et plus en avant que le siège (6),
une extrémité supérieure du carénage interne (20) se trouve à une position plus basse qu'une extrémité supérieure d'une ouverture d'extrémité avant (FFO) du carénage de tunnel (TC),
le carénage de tunnel (TC) comprend
un carénage supérieur (30) qui s'étend en direction avant-arrière du véhicule à une position plus haute que les carénages de repose-pied droit et gauche (60R, 60L), et
des carénages latéraux droit et gauche (40R, 40L) qui s'étendent en direction avant-arrière du véhicule et qui s'étendent vers le bas depuis des bords des deux côtés du carénage supérieur (30),
chacun des carénages de repose-pied droit et gauche (60R, 60L) comprend
un repose-pied (62) qui s'étend en direction gauche-droite du véhicule, et
une paroi latérale (61) qui s'étend vers le haut depuis un bord interne du repose-pied (62), où chacune des parois latérales (61) comporte une première portion (61a), une deuxième portion (61b) et une troisième portion (61c), la première portion (61a) s'étend vers le haut depuis le bord interne du repose-pied (62), la deuxième portion (61b) s'étend vers l'intérieur depuis l'extrémité supérieure de la première portion (61a), la troisième portion (61c) s'étend vers le haut depuis l'extrémité inférieure de la deuxième portion (61b), les carénages latéraux droit et gauche (40R, 40L) sont connectés respectivement aux carénages de repose-pied droit et gauche (60R, 60L), de telle sorte que les extrémités inférieures des carénages latéraux droit et gauche (40R, 40L) se trouvent respectivement à des positions plus à l'extérieur que les troisièmes portions (61c) des parois latérales droite and gauche (61),
le carénage interne (20) comporte une ouverture (22) opposée à la roue avant (FW), et l'ouverture (22) est positionnée sous des portions de connexion droite et gauche (J) entre les carénages latéraux droit et gauche (40R, 40L) et les carénages de repose-pied droit et gauche (60R, 60L) en vue latérale du véhicule,
dans chacune des parois latérales (61), une rainure (61d) qui s'étend en direction avant-arrière du véhicule est formée par la deuxième portion (61b) et la troisième portion (61c), et
les extrémités inférieures des carénages latéraux droit et gauche (40R, 40L) sont agencées au-dessus des rainures (61d) formées respectivement par la deuxième portion (61b) et la troisième portion (61c),
chacune des rainures (61d) est conformée pour être inclinée vers l'arrière et vers le bas depuis l'avant,
**caractérisé en ce que**
la deuxième portion (61b) de chacune des parois latérales (61) s'étend en outre vers le bas depuis l'extrémité supérieure de la première portion respective (61a), et un trou d'évacuation (61 h) à travers lequel de l'eau récoltée dans la rainure respective (61d) peut être évacuée vers un espace plus vers l'intérieur que les carénages de repose-pied droit et gauche (60R, 60L) est formé à une extrémité inférieure de chaque rainure (61d).

2. Véhicule à moteur du type avec selle à enfourcher selon la revendication 1, **caractérisé en ce que**
chacune des portions de connexion (J) comprend
une portion de connexion avant (J1) qui s'étend vers l'arrière et vers le bas depuis une extrémité avant, et
une portion de connexion arrière (J2) qui s'étend vers l'arrière et vers le haut depuis une extrémité arrière de la portion de connexion avant (J1), et
l'ouverture (22) du carénage interne (20) se trouve à une position plus basse que les portions de connexion avant (J1).

3. Véhicule à moteur du type avec selle à enfourcher selon la revendication 1 ou 2, **caractérisé en ce que**
une portion de gouttière avant (23a) est pourvue au-dessus de l'ouverture (22) dans le carénage interne (20) en vue de face du véhicule, et
la portion de gouttière avant (23a) s'étend vers l'avant et vers le bas depuis une position au-dessus de l'ouverture (22).

4. Véhicule à moteur du type avec selle à enfourcher selon l'une quelconque des revendications 1 à 3, **caractérisé en ce que**
une portion de gouttière arrière (23b) est pourvue au-dessus de l'ouverture (22) dans le carénage interne (20) en vue de face du véhicule, et
la portion de gouttière arrière (23b) s'étend vers l'arrière et vers le bas depuis la position au-dessus de l'ouverture (22).

5. Véhicule à moteur du type avec selle à enfourcher selon l'une quelconque des revendications 1 à 4, **caractérisé par** un garde-boue avant (2F) attaché à la fourche avant (2), dans lequel l'ouverture (22) du carénage interne (20) se trouve derrière la roue avant (FW) pour être opposée à la roue avant (FW), et se trouve à une position plus basse qu'une extrémité inférieure arrière du garde-boue avant (2F) en vue latérale du véhicule.

6. Véhicule à moteur du type avec selle à enfourcher selon l'une quelconque des revendications 1 à 5, **caractérisé en ce que** l'ouverture (22) du carénage interne (20) se trouve à une position plus haute qu'un essieu de la roue avant (FW).

7. Véhicule à moteur du type avec selle à enfourcher selon l'une quelconque des revendications 1 à 6, **caractérisé en ce que**
le corps principal (1) comprend en outre
un tube de tête (11), et
un châssis inférieur (12) qui s'étend vers le bas depuis le tube de tête (11),
la partie du carénage interne (20) est positionnée entre la roue avant (FW) et le châssis inférieur (12),
le carénage interne (20) présente une surface avant (20A) et une surface arrière (20B),
une portion concave (24a) qui s'étend en direction haut-bas est formée sur la surface arrière (20B) du carénage interne (20), et une portion convexe (24b) qui correspond à la portion concave (24a) est formée sur la surface avant (20A) du carénage interne (20), et
l'ouverture (22) du carénage interne (20) se trouve à une position plus basse que la portion convexe (24b).
